# EUROPÄISCHE PATENTSCHRIFT

(11) **EP 4 186 152 B1**
(45) Veröffentlichungstag und Bekanntmachung des Hinweises auf die Patenterteilung: **02.09.2026**
(21) Anmeldenummer: 22714385.6
(22) Anmeldetag: 11.03.2022
(51) Int. Cl.: H02K 15/35

(54) **VORRICHTUNG UND VERFAHREN ZUM ABLÄNGEN UND VERSCHWEISSEN VON HAIRPIN-ENDEN AN STATOREN**
APPARATUS AND METHOD FOR CUTTING TO LENGTH AND WELDING OF HAIRPIN ENDS TO STATORS
DISPOSITIF ET PROCÉDÉ DE COUPE À LONGUEUR ET DE SOUDAGE D'EXTRÉMITÉS D'ÉPINGLES À CHEVEUX SUR DES STATORS

(30) Priorität: 18.03.2021 DE 102021106688
(43) Veröffentlichungstag der Anmeldung: 31.05.2023
(73) Patentinhaber: Gehring Technologies GmbH + Co. KG, 73760 Ostfildern (DE)
(72) Erfinder: SCHEEFF, Sebastian, 73728 Esslingen (DE); BÄDER, Christoph, 73776 Altbach (DE); FRIED, Bernd, 75417 Mühlacker (DE); GÜNTHER, Luis, 70597 Stuttgart (DE)
(74) Vertreter: DREISS Patentanwälte PartG mbB
(86) Internationale Anmeldenummer: PCT/EP2022/056322
(87) Internationale Veröffentlichungsnummer: WO 2022/194699

(56) Entgegenhaltungen:
- DE-A1- 102018 103 930
- DE-A1- 102018 117 420
- DE-U1- 202019 101 819

## Beschreibung

Die Erfindung betrifft eine Vorrichtung zum Ablängen und Verschweißen von Hairpin-Enden an Statoren für Elektromotoren. Zudem betrifft die Erfindung ein Verfahren zum Ablängen und Verschweißen von Hairpin-Enden an Statoren für Elektromotoren und ein Stator für einen Elektromotor, hergestellt nach einem solchen Verfahren.

Verfahren und Vorrichtungen zur Herstellung von Statoren sind im Stand der Technik bekannt. Verwendung finden Statoren in elektrodynamischen Maschinen, z. B. in Elektromotoren.

Bei der Fertigung von elektromechanischen Wandlern, insbesondere Elektromotoren, insbesondere für Traktionsantriebe, werden einzelne Wicklungselemente (Steckspulen, sog. "Hairpins") hergestellt, die im weiteren Prozess zu einer Statorwicklung weiterverarbeitet werden.

Um bedingt durch höheren Füllungsgrad eine höhere Effizienz von Elektromaschinen zu erreichen, wurde in der Hairpin-Technologie von runden auf rechteckige Leiterquerschnitte übergegangen. Im Rahmen der Erfindung ist die Verwendung von beliebigen Leiterquerschnitten möglich, also bspw. runde oder rechteckige Querschnitte.

Im Rahmen der Herstellung der Wicklungselemente werden aus Endlosmaterial entsprechende Leiterstücke abgetrennt, bspw. durch Schneiden. Anschließend werden die Leiterstücke an Abschnitten, die in einem späteren Schritt verschweißt werden sollen, abisoliert. Hiernach können die Leiterstücke zu geeigneten Wicklungselementen umgeformt werden, bspw. zu entsprechenden Hairpins gebogen werden. Ein Hairpin weist üblicherweise zwei Schenkel auf, die an einem Ende miteinander verbunden sind (ähnlich dem geschlossenen Ende einer U-förmigen Haarnadel). Am anderen Ende weisen die Schenkel jeweils ein freies Ende auf, die parallel zueinanderstehen und jeweils einen abisolierten Abschnitt aufweisen, an dem die Hairpins später verschweißt werden können.

Mehrere Hairpins können zu einem Korb (Statorkorb) gefügt werden und es kann optional eine Papierisolierung in den Stator eingefügt werden. Hiernach werden die Hairpins bzw. der Korb in den Stator eingefügt und deren Enden ggf. gegeneinander verdreht ("Twisten"), wodurch die Hairpins formschlüssig im Statorkern gehalten werden können. Die Wicklungselemente bzw. Hairpins können nach der Positionierung am Stator an Ihren Enden miteinander verschweißt werden. Um dieses Verschweißen sicher und reproduzierbar zu gestalten, müssen miteinander zu verschweißende Hairpins in einer genau definierten Position zueinander positioniert werden, um deren gewünschten Kontakt miteinander sicherzustellen.

Im Stand der Technik sind zahlreiche Vorrichtungen und Verfahren zum Ausrichten und Maskieren der Leiterelemente bzw. Hairpins von Statoren vor einem Schweißvorgang bekannt. Nachfolgend werden nur vorbekannte Vorrichtungen und Verfahren für Statoren beschrieben, die nach der Hairpin-Technologie gefertigt sind.

Beispielsweise werden einzelne Statorsegmente innerhalb eines Schweißrings der Reihe nach verspannt und maskiert. Dazu werden unter anderem Spannstifte eingesetzt, welche radial in das jeweilige Statorsegment eingefahren werden und die Enden der einzelnen Hairpin-Paare zueinander positionieren. Ergänzend dazu weist ein flächig ausgebildetes Maskierblech, das über dem nicht in Bearbeitung befindlichen Teil des Stators angeordnet ist, eine in z-Richtung orientierte Anschlagfläche für die zu spannenden Hairpin-Paare auf. Nachteilig an dieser Vorgehensweise ist die geringe Anzahl der in ein- und derselben Geräteeinstellung bearbeitbaren Hairpin-Paare. Zudem ist diese Methode nicht für Statoren mit mehreren Schweißringen anwendbar.

Alternativ sind eine Vollspannung und eine Vollmaskierung möglich. Dazu werden in einer Variante die zu verschweißenden Enden der Hairpin-Paare in zwei, jeweils mit Durchgängen versehene und übereinander angeordnete Deckbleche aufgenommen. Anschließend erfolgt die tangentiale und radiale Ausrichtung der Enden der Hairpin-Paare, indem die Deckbleche gegeneinander verdreht werden. In der Endposition kontaktieren die Innenseiten der Durchgänge die Enden der Hairpin-Paare in Umfangsrichtung.

Eine andere bekannte Ausführung der Vollspannung und Vollmaskierung sieht Blechstreifen mit Durchgängen für die zu verschweißenden Enden der Hairpin-Paare vor. Es wird jeweils eine radiale Reihe an Hairpin-Paaren in die Durchgänge zweier übereinander angeordneter Streifen aufgenommen. Dann werden die Bleche radial gegeneinander verschoben. Dieser Aufbau ist sehr aufwändig, insbesondere bezüglich Wartung und Reparatur.

DE 10 2018 117 420 A1, DE 10 2018 103 930 A1 und DE 20 2019 101 819 U offenbaren jeweils eine Vorrichtung mit Merkmalen des Anspruchs 1.

Nachteilig an diesen beiden Methoden der Vollspannung und Vollmaskierung ist insbesondere das Risiko, dass beim Schweißen anfallende Metallteilchen den Verdrehmechanismus blockieren können. Zudem sind je nach Querschnittsgeometrie der zu verschweißenden Hairpins Öffnungen in der jeweiligen Maskierung erforderlich.

Insgesamt sind die im Stand der Technik beschriebenen Vorrichtungen und Verfahren als relativ komplex, arbeits- und
kostenintensiv sowie als störungsanfällig zu bewerten. Außerdem zeigen sie Einschränkungen hinsichtlich der Querschnittsgeometrien der Hairpins, der Anzahl der zeitgleich ausrichtbaren und/oder verschweißbaren Hairpin-Paare und/oder der Anzahl der bearbeitbaren Schweißringe. Insgesamt sind die bekannten Methoden unter ökonomischen Gesichtspunkten als unbefriedigend einzustufen.

Der Erfindung liegt die Aufgabe zugrunde, eine Vorrichtung und ein Verfahren bereitzustellen, mit denen ein Verschweißen von Hairpin-Enden an mit Hairpins ausgestatteten Statoren einfach, kostengünstig, zuverlässig und reproduzierbar vorbereitet und durchgeführt werden kann.

Diese Aufgabe wird durch eine Vorrichtung gemäß Anspruch 1 gelöst.

Die Vorrichtung dient zum Ablängen und Verschweißen von Hairpin-Enden an (mit Hairpins ausgestatteten) Statoren für Elektromotoren. Die Vorrichtung weist eine Werkstückhalteeinrichtung für die Statoren auf, wobei die Werkstückhalteeinrichtung zwei Statoraufnahmen zum Halten und Spannen von jeweils einem Stator aufweist, wobei an jeder Statoraufnahme eine Maskierscheibe mit Öffnungen vorgesehen ist, durch die dann, wenn in der Statoraufnahme ein Stator angeordnet (bspw. gehalten und gespannt) ist, jeweils Hairpins des Stators mit ihren freien Enden (freie Enden der Schenkel der Hairpins) insbesondere paarweise herausragen. Die Vorrichtung weist weiter eine Ablängeeinrichtung zum Ablängen von aus der Maskierscheibe herausragenden freien Enden der Hairpins auf eine definierte Länge auf (definierter Überstand der Hairpins bezogen auf die Maskierscheibe). Die Vorrichtung weist zudem eine Schweißeinrichtung zum insbesondere paarweisen Verschweißen der aus der Maskierscheibe herausragenden freien Enden der Hairpins auf. Die Werkstückhalteeinrichtung ist schwenkbar um eine Schwenkachse gelagert, so dass ein in der Statoraufnahme angeordneter bzw. gehaltener Stator durch einen Schwenkvorgang der Werkstückhalteeinrichtung von der Ablängeeinrichtung (bzw. einem Arbeitsbereich der Ablängeeinrichtung) zur Schweißeinrichtung (bzw. einem Arbeitsbereich der Schweißeinrichtung) und/oder von der Schweißeinrichtung (bzw. einem Arbeitsbereich der Schweißeinrichtung) zur Ablängeeinrichtung (bzw. einem Arbeitsbereich der Ablängeeinrichtung) verlagert werden kann. Mit anderen Worten kann die Werkstückhalteeinrichtung durch Verschwenken den in der Statoraufnahme gehaltenen Stator von der Ablängeeinrichtung in die Schweißeinrichtung und umgekehrt einwechseln.

Dadurch werden zwei Arbeitsschritte, nämlich Ablängen und Schweißen von Hairpin-Enden eines Stators in nur einer Vorrichtung integriert. Zum Einwechseln bzw. Austauschen der Statoren (Werkstücke) zwischen den Bearbeitungsstationen (Ablängeeinrichtung und Schweißeinrichtung) ist lediglich ein Verschwenken der Werkstückhalteeinrichtung erforderlich, wobei die Statoren in ihrer jeweiligen Statoraufnahme verbleiben, in dieser gehalten werden und gespannt sind. Dies trägt zu einem konstruktiv einfachen und besonders schnellen Auswechseln der Statoren in den Bearbeitungsstationen bei.

Die Länge, um die Hairpin-Enden mittels der Ablängeeinrichtung gekürzt wird ("Abschnitt"), ist insbesondere geringer als die abisolierte Länge am freien Ende der Hairpins ("Abisolierlänge").

Die Vorrichtung kann eine Basis (Grundplatte), einen an der Basis befestigten Rahmen, der bspw. Verkleidungselemente trägt, und/oder einen angeschlagenen Schaltschrank aufweisen.

Die Komponenten der Vorrichtung, insbesondere die Ablängeeinrichtung und die Schweißeinrichtung, können innerhalb des Rahmens angeordnet sein. Im Schaltschrank können eine Energieversorgung und/oder eine Steuerung der Vorrichtung untergebracht sein.

Die Schwenkachse, um welche die Werkstückhalteeinrichtung schwenkbar gelagert ist, kann horizontal oder vertikal angeordnet sein. Die Lagerung der Werkstückhalteeinrichtung kann als beidseitige Lagerung oder als einseitige ("fliegende") Lagerung ausgebildet sein.

Die Werkstückhalteeinrichtung kann zwischen zwei Schwenkstellungen bzw. Arbeitsstellungen verschwenkt werden, nämlich einer ersten Schwenkstellung und einer zweiten Schwenkstellung. In einer ersten Schwenkstellung befindet sich die erste Statoraufnahme im Arbeitsbereich der oder an der Ablängeeinrichtung und die zweite Statoraufnahme befindet sich im Arbeitsbereich der oder an der Schweißeinrichtung. In der zweiten Schwenkstellung befindet sich die erste Statoraufnahme im Arbeitsbereich der oder an der Schweißeinrichtung und die zweite Statoraufnahme im Arbeitsbereich der oder an der Ablängeeinrichtung. Die erste Schwenkstellung und die zweite Schwenkstellung können um einen Schwenkwinkel von 180° auseinanderliegen. Die Werkstückhalteeinrichtung kann derart gelagert sein, dass diese um einen Schwenkwinkel von 180° um die Schwenkachse verschwenkbar ist. Die Schwenkbewegung der Werkstückhalteeinrichtung kann hierauf begrenzt sein.

Es kann ein sich bspw. von der Basis erstreckendes Gestell vorgesehen sein, an dem die Werkstückhalteeinrichtung schwenkbar gelagert ist. Am Gestell können auch Schienen für die verfahrbare Konsole angeordnet sein, auf der die Ablängeeinrichtung positioniert sein kann (weiter unten beschrieben). Auch die Schweißeinrichtung bzw. die Antriebseinheit und/oder der Drehantrieb der Schweißeinrichtung können am Gestell befestigt sein (weiter unten beschrieben).

Die Statoraufnahmen bzw. die Mittellängsebene der Statoraufnahmen können parallel zueinander angeordnet sein. Ist in beiden Statoraufnahmen jeweils ein Stator angeordnet, sind die Mittellängsachsen der Statoren parallel zueinander orientiert. Die Statoraufnahmen können derart orientiert sein, dass (bezogen auf eine Schwenkstellung der Werkstückhalteeinrichtung) eine erste Statoraufnahme bezogen auf die Werkstückhalteeinrichtung bzw. eine Schwerkraftrichtung nach oben orientiert ist (Statoraufnahme nach oben hin offen, **d.h.** Stator befindet sich teilweise oberhalb der Statoraufnahme) und dass die zweite Statoraufnahme bezogen auf die Werkstückhalteeinrichtung bzw. eine Schwerkraftrichtung nach unten orientiert ist (Statoraufnahme nach unten hin offen, **d.h.** Stator befindet sich teilweise unterhalb der Statoraufnahme).

Die Werkstückhalteeinrichtung kann zwei Abschnitte aufweisen, die entlang einer orthogonal zur Schwenkachse orientierten Achse versetzt zueinander angeordnet sind. Hiermit sind die Statoraufnahmen voneinander beabstandet, so dass sich ein Ablängen und ein Verschweißen der Hairpin-Enden nicht oder nur in vernachlässigbarer Weise beeinflussen.

Erfindungsgemäß können die Werkstückhalteeinrichtung, die Ablängeeinrichtung und die Schweißeinrichtung derart zueinander angeordnet sein, dass wenn sich eine der Statoraufnahmen an der Ablängeeinrichtung, insbesondere in deren Arbeitsbereich, befindet, sich die andere Statoraufnahme an der Schweißeinrichtung, insbesondere in deren Arbeitsbereich, befindet und/oder kann die Schwenkachse der Werkstückhalteeinrichtung zwischen den beiden Statoraufnahmen angeordnet sein, wobei, wenn sich eine der Statoraufnahmen an der Ablängeeinrichtung, insbesondere in deren Arbeitsbereich befindet (Werkzeughalteeinrichtung befindet sich in einer der Schwenkstellungen), die Ablängeeinrichtung auf einer Seite der Werkzeughalteeinrichtung (entlang der Schwerkraftrichtung nach unten) und die Schweißeinrichtung auf der gegenüberliegenden Seite der Werkzeughalteeinrichtung (entlang der Schwerkraftrichtung nach oben) angeordnet ist.

Somit kann jeweils ein Stator im Arbeitsbereich der Ablängeeinrichtung angeordnet sein und zugleich ein weiterer Stator an der Schweißeinrichtung. Somit können in der Vorrichtung zwei Statoren zumindest teilweise gleichzeitig (zeitliche Überlappung der Bearbeitung), vorzugsweise vollständig gleichzeitig (gleichzeitige Bearbeitung der Statoren), gemeinsam bearbeitet werden. Wenn bspw. an einem Stator die Hairpin-Enden abgelängt werden, werden am anderen Stator die (bereits abgelängten) Hairpin-Enden verschweißt.

Der Arbeitsbereich der Ablängeeinrichtung beschreibt den Bereich, in dem durch die Ablängeeinrichtung Hairpin-Enden abgelängt werden können. Der Arbeitsbereich der Schweißeinrichtung beschreibt den Bereich, in dem durch die Schweißeinrichtung Hairpin-Enden verschweißt werden können.

Die Werkzeughalteeinrichtung kann sich entlang der Schwerkraft zwischen der Schweißeinrichtung und der Ablängeeinrichtung befinden. Somit kann eine Verlagerung der Statoren zwischen der Ablängeeinrichtung und der Schweißeinrichtung nur durch einen Schwenkvorgang erfolgen. Zudem trägt dies zu einer konstruktiv einfachen und stabilen Ausgestaltung einer Verlagerung bei.

Im Rahmen einer bevorzugten Ausgestaltung kann die Vorrichtung eine Handhabungseinrichtung zur Handhabung eines Stators (bspw. ein Portalhandlingsystem) und eine Übergabestation zum Ablegen eines Stators aufweisen, wobei die Handhabungseinrichtung dazu eingerichtet ist, um einen Stator aufzunehmen und von der Übergabestation zu der sich an der Ablängeeinrichtung, insbesondere in deren Arbeitsbereich, befindenden Statoraufnahme zu verlagern und/oder von der sich an der Ablängeeinrichtung, insbesondere in deren Arbeitsbereich, befindenden Statoraufnahme zu der Übergabestation zu verlagern. Durch die Übergabestation ist ein definierter Übergabepunkt für Statoren geschaffen. Es kann eine Ablage eines (durch die Vorrichtung noch) unbearbeiteten Stators und/oder eine Aufnahme eines (von der Vorrichtung) bearbeiteten Stators an der Übergabestation erfolgen. Dadurch kann die Vorrichtung als modulare Einheit in eine Fertigungskette eingebunden werden (Vorrichtung kann Bestandteil einer Fließfertigung bilden). Die Übergabestation kann bspw. als Ablageteller, ggf. mit erhabenem Rand oder erhabenen Randabschnitten ausgebildet sein, der bspw. mittels Profilelementen am Rahmen der Vorrichtung befestigt ist.

In vorteilhafter Weise kann die Ablängeeinrichtung eine vorzugsweise verschwenkbare Reinigungseinrichtung aufweisen, mittels der die Maskierscheibe der sich an der Ablängeeinrichtung, insbesondere in deren Arbeitsbereich, befindenden Statoraufnahme gereinigt werden kann. Somit kann die Maskierscheibe sauber gehalten und bspw. von Schweißrückständen befreit werden. Somit wird das Ablängen der Hairpins und der Schweißvorgang nicht durch Rückstande beeinträchtigt. Die Reinigungseinrichtung kann eine drehbare Bürsteneinheit (bspw. eine angetriebene Topfbürste) aufweisen, die mittels eines Arms (Schwenkarm) in den Bereich der Maskierscheibe eingebracht, insbesondere eingeschwenkt, werden kann.

In zweckmäßiger Weise kann an den Statoraufnahmen jeweils eine Spanneinrichtung angeordnet sein, mittels der der Stator in der Statoraufnahme axial (entlang der Mittellängsachse des Stators) verspannbar ist. Somit ist ein gezieltes Verspannen des Stators in der Statoraufnahme möglich. Zur Maskierscheibe der Statoraufnahme hin kann eine Statoranlage (Anschlag) angeordnet sein. Die Spanneinrichtung kann auf das aus der Statoraufnahme herausragende Ende wirken, so dass der Stator bei aktivierter Spanneinrichtung gegen die Statoranlage gedrückt bzw. verspannt wird.

Im Konkreten kann die Spanneinrichtung ein Basisteil (bspw. ein Basisring) und ein axial relativ zum Basisteil bewegliches Spannteil (bspw. ein Spannring) aufweisen. Das Basisteil kann mit einer Riemenscheibe und/oder einer drehbaren Buchse der Statoraufnahme drehfest gekoppelt sein (weiter unten beschrieben). Zwischen dem Basisteil und dem beweglichen Spannteil können Stifte zur Führung des Spannteils relativ zum Basisteil und/oder Federn zur Bereitstellung einer Vorspannung angeordnet sein.

Die Spanneinrichtung kann zudem einen oder mehrere Spannhebel aufweisen, die auf den Stator wirken. Der Spannhebel kann gelenkig mit dem Basisteil und dem Spannteil gekoppelt sein. Ein radial nach innen ragender Abschnitt des Spannhebels kann mit dem Stator in Kontakt gelangen. Wird das Spannteil axial vom Basisteil wegbewegt, wird der nach innen ragende Abschnitt des Spannhebels nach unten verschwenkt und spannt dadurch den Stator. Zum Antrieb der Spanneinrichtung kann eine Spannantriebseinrichtung vorgesehen sein, die an der Werkstückhalteeinrichtung befestigt ist und die auf das Spannteil wirkt. Die Spannantriebseinrichtung kann als elektrischer Stellmotor oder als Pneumatikzylinder ausgebildet sein. Für ein gleichmäßiges Verspannen können zwei Spannantriebseinrichtungen vorgesehen sein, die bezogen auf das Spannteil einander gegenüberliegend angeordnet sind.

Im Rahmen einer bevorzugten Ausgestaltung kann an den Statoraufnahmen angrenzend (axial nach innen versetzt) an die Maskierscheibe jeweils eine Spannscheibe ("Gegenhaltescheibe" zur Maskierscheibe) angeordnet sein, die Öffnungen aufweist, durch die dann, wenn in der Statoraufnahme ein Stator angeordnet bzw. gehalten ist, jeweils Hairpins des Stators insbesondere paarweise hindurchragen, wobei mindestens eine Antriebseinheit vorgesehen ist, mittels der die Maskierscheibe und die Spannscheibe relativ zueinander verdrehbar sind. Dadurch können die Hairpin-Enden positioniert und in ihrer Positionierung gespannt werden. So ragen die Hairpin-Enden durch die Öffnungen in der Maskierscheibe und in der Spannscheibe hindurch und können durch Verdrehen von Maskierscheibe und Spannscheibe relativ zueinander gespannt werden (Hairpin-Enden liegen an den Rändern der Öffnungen an und werden dadurch geklemmt). Die Öffnungen in der Spannscheibe und in der Maskierscheibe können teilweise oder vollständig identisch ausgebildet sein (teilweise oder vollständig identisches "Lochmuster"). Zum Einbringen eines Stators fluchten die Öffnungen in der Maskierscheibe und der Spannscheibe miteinander, so dass die Hairpin-Enden des Stators durch die Öffnungen hindurchgeführt werden können. Zum Fixieren bzw. Verspannen der Hairpin-Enden werden die Spannscheibe und die Maskierscheibe relativ zueinander verdreht, wie oben erläutert.

Das Verspannen kann vor einem Ablängen erfolgen und bis nach dem Schweißen aufrechterhalten werden. Somit behalten die Hairpin-Enden beim Ablängen und beim Verschweißen Ihre Position bei. Die Maskierscheibe und/oder die Spannscheibe können um eine Schwenkachse gedreht werden, die zur Mittellängsachse eines in der Statoraufnahme angeordneten Stators parallel oder kongruent ist.

Die Antriebseinheit, mittels der die Maskierscheibe und die Spannscheibe relativ zueinander verdrehbar sind, kann als elektromotorisch angetriebene Spindeleinheit mit einer Spindel ausgebildet sein. Auf der Spindel kann ein Schlitten laufen, der mit der Maskierscheibe oder der Spannscheibe gekoppelt ist. Die Maskierscheibe und/oder die Spannscheibe können jeweils eine z.B. radial abragende Lasche aufweisen, die, bspw. mittels eines Stifts oder einer Schraube, mit dem Schlitten gekoppelt ist. Die Antriebseinheit kann an der drehbaren Buchse der Statoraufnahme angeordnet oder mit dieser gekoppelt sein (weiter unten beschrieben).

Vorzugsweise können die Statoraufnahmen jeweils um eine bezogen auf die Werkstückhalteeinrichtung normale Achse (Achse erstreckt sich bezogen auf die Werkstückhalteeinrichtung entlang einer Normalenrichtung) drehbar an der Werkstückhalteeinrichtung gelagert sein, wobei jeweils ein Drehantrieb vorgesehen ist, durch den die Statoraufnahme (um die normale Achse) gedreht werden kann. Dadurch kann die Statoraufnahme bzw. der Stator relativ zur Werkstückhalteeinrichtung gedreht werden. Somit lässt sich eine passende Drehstellung zum Ablängen und/oder Verschweißen der Hairpin-Enden erreichen.

Der Drehantrieb kann bspw. als Riemenantrieb ausgebildet sein. Der Drehantrieb kann als Antriebsquelle einen Elektromotor aufweisen, der mit einem, bspw. auf der Motorwelle drehfest angeordneten, Antriebsritzel gekoppelt ist. An der Statoraufnahme kann eine drehfest mit der Statoraufnahme gekoppelte Riemenscheibe oder ein entsprechender Riemenscheibenabschnitt vorgesehen sein. Eine Kopplung von Antriebsritzel und Riemenscheibe bzw. Riemenscheibenabschnitt kann über einen Antriebsriemen erfolgen. Eine vollständige Umdrehung der Statoraufnahme um 360° ist nicht zwingend erforderlich. So kann ggf. eine teilweise Drehung, bspw. um 90°, ggf. ausreichend sein, wenn die Ablängeeinrichtung mehrere, bspw. vier, Ablängeeinheiten aufweist, die um die Statoraufnahme herum angeordnet sind.

In zweckmäßiger Weise kann die Ablängeeinrichtung auf einer entlang einer Verfahrrichtung (bspw. Schwerkraftrichtung) verfahrbaren Konsole angeordnet sein, wobei die Ablängeeinrichtung durch Verfahren der Konsole entlang der Verfahrrichtung zur Maskierscheibe der sich an der Ablängeeinrichtung, insbesondere in deren Arbeitsbereich, befindenden Statoraufnahme herangeführt und/oder von der Maskierscheibe dieser Statoraufnahme weggeführt werden kann.

Somit kann die Ablängeeinrichtung zum Ablängen an die Maskierscheibe herangefahren werden, um freie Hairpin-Enden auf eine definierte Länge (definierter Überstand bezogen auf die Maskierscheibe) zu kürzen. Werden keine Hairpin-Enden abgelängt, kann die Ablängeeinrichtung von der Maskierscheibe bzw. der Statoraufnahme weg verfahren werden, um ein Verschwenken der Werkstückhalteeinrichtung nicht zu behindern. Die Konsole kann Führungselemente aufweisen, die an entlang der Verfahrrichtung ausgerichteten Führungsschienen geführt sind. Die Führungsschienen können an dem sich bspw. von der Basis der Vorrichtung erstreckenden Gestell angeordnet sein. Zum Antrieb der Konsole kann ein Elektromotor oder ein pneumatischer Zylinder vorgesehen sein.

In vorteilhafter Weise kann die Ablängeeinrichtung eine Distanzscheibe aufweisen, die beim Ablängen von Hairpin-Enden an der Maskierscheibe der Statoraufnahme, die sich an der Ablängeeinrichtung befindet, anliegt oder um ein definiertes Maß von dieser beabstandet ist, wobei die Ablängeeinrichtung derart ausgebildet ist, dass ein Ablängen der Hairpin-Enden an der von der Maskierscheibe abgewandten Seite der Distanzscheibe erfolgt. Somit kann durch die Distanzscheibe bzw. durch die Position der Distanzscheibe relativ zum Stator der Überstand der Hairpins, d.h. die Länge der Hairpin-Enden, vorgegeben werden. Die Distanzscheibe kann Öffnungen aufweisen, durch die dann, wenn die Ablängeeinrichtung an eine mit einem Stator bestückte Statoraufnahme herangeführt wird, die Hairpin-Enden durch die Öffnungen dringen. Die Distanzscheibe kann auswechselbar ausgebildet sein, insbesondere mittels einer Schnellwechseleinrichtung. Somit kann die Distanzscheibe bei Verschleiß einfach und schnell ausgetauscht werden oder es kann durch eine Distanzscheibe mit anderer Dicke der Überstand der Hairpins angepasst werden. Wie oben bereits erläutert, ist die Abschnittlänge bzw. der Abschnitt, um den die Hairpin-Enden abgelängt werden, vorzugsweise kürzer als die abisolierte Länge (Abisolierlänge) der Hairpin-Enden.

In zweckmäßiger Weise kann die Distanzscheibe in der Ablängeeinrichtung drehbar um ihre Mittellängsachse gelagert sein. Somit kann die Distanzscheibe mit der Statoraufnahme bzw. deren Maskierscheibe mitdrehen, so dass Hairpins über den Umfang der Distanzscheibe bzw. der Maskierscheibe Segment für Segment (radiale Reihen von Hairpins) abgelängt werden können. Die Mittellängsachse der Distanzscheibe kann parallel oder kongruent zur Mittellängsachse eines in der Statoraufnahme gehaltenen Stators und/oder zur Rotationsachse der sich an der Ablängeeinrichtung befindenden Statoraufnahme angeordnet sein.

In vorteilhafter Weise kann eine vorzugsweise pneumatisch betätigte Verriegelungseinheit vorgesehen sein, mittels der die Distanzscheibe in ihrer Drehstellung relativ zur Ablängeeinrichtung feststellbar ist. Somit kann die Distanzscheibe beim Heranfahren an die Maskierscheibe und/oder beim Wegfahren von der Maskierscheibe in der korrekten Drehstellung gehalten werden. Dies erleichtert ein Einführen der Hairpin-Enden in die Durchgänge der Distanzscheibe. Prozesssicherheit und Qualität der abgelängten Hairpin-Enden werden somit begünstigt.

Im Rahmen einer bevorzugten Ausgestaltung kann in Schwerkraftrichtung unterhalb der Ablängeeinrichtung eine vorzugsweise passive Auffangeinrichtung zum Auffangen und Sammeln von abgetrennten Hairpin-Enden angeordnet sein. Somit können abgetrennte Drahtabschnitte aufgefangen und einer Entsorgung zugeführt werden. Die Auffangeinrichtung kann ein sich vorzugsweise konisch verjüngendes Sammelrohr, bspw. einen Trichter, aufweisen, das in eine Ausgabeöffnung mündet. An oder unterhalb der Ausgabeöffnung kann ein entnehmbarer Sammelbehälter vorgesehen sein. Die Ablängeeinrichtung kann in sich geschlossen ausgebildet sein, d.h. von der Distanzscheibe der Ablängeeinrichtung bis zur Ausgabeöffnung kann ein Kanal ausgebildet sein.

In zweckmäßiger Weise kann an der Ablängeeinrichtung ein Kamerasystem zur Erfassung von abgelängten Hairpin-Enden vorgesehen sein. Somit kann der Betrieb der Ablängeeinrichtung überwacht werden. Abgelängte Hairpin-Enden können einer Qualitätskontrolle unterzogen werden.

In vorteilhafter Weise kann die Ablängeeinrichtung eine oder mehrere, um den Umfang der Distanzscheibe vorzugsweise regelmäßig verteilte (bspw. in gleichen Winkeln zueinander angeordnete) Ablängeeinheiten aufweisen, mittels denen die Hairpin-Enden abgetrennt werden, wobei die Ablängeeinheiten jeweils als vorzugsweise pneumatisch betätigte Stoßeinheit (Ablängen bspw. durch angetriebenen Stoßmeißel), als Schneideinheit (Ablängen bspw. durch Zangenbeißen) oder als Fräßeinheit ausgebildet ist (Ablängen bspw. durch rotierendes Messer bzw. rotierenden Fräser). Somit ist ein zuverlässiges Ablängen der Hairpin-Enden möglich. Nach einem Ablängen können die Hairpin-Paare jeweils auf gleiche Länge, bspw. auf ≤ ±0,2mm eingekürzt sein. Bei mehreren Ablängeeinheiten können diese (um den Umfang der Distanzscheibe) in gleichen Winkeln zueinander angeordnet sein. Zudem kann ein gleichzeitiges Ablängen an mehreren Stellen erfolgen.

Die Statoraufnahme, die sich an der Ablängeeinrichtung befindet, und die Ablängeeinrichtung können derart miteinander zusammenwirken, dass die Ablängeeinheiten jeweils die in einer radialen Reihe befindenden Hairpin-Enden ablängt, ggf. zurückfährt, und die Statoraufnahme mittels deren Drehantrieb um einen definierten Winkel rotiert wird, so dass die Ablängeeinheiten die nächsten Hairpin-Enden in einer benachbarten radialen Reihe ablängen kann. Bei vier Ablängeeinheiten können diese bspw. im Winkel von jeweils 90° zueinander angeordnet sein. Die Statoraufnahme kann während dem Ablängen der Hairpin-Enden schrittweise um bis zu 90° gedreht werden. Bei Ausgestaltung der Ablängeeinheit als Stoßeinheit können die Stoßmeißel verschieden ausgebildet sein (unten beschrieben).

In zweckmäßiger Weise kann eine Schnellwechseleinrichtung vorgesehen sein, mittels der die Distanzscheibe mit der Ablängeeinrichtung gekoppelt ist. Dadurch kann ein einfacher und schneller Austausch einer Distanzscheibe erfolgen, bspw. um eine verschlissene Distanzscheibe zu ersetzen oder eine Distanzscheibe mit anderer Dicke einzubauen.

In vorteilhafter Weise kann an den Ablängeeinheiten jeweils eine Schnellwechseleinrichtung vorgesehen sein, mittels der ein Werkzeug, bspw. ein Stoßmeißel, mit der Ablängeeinheit, bspw. einer Stoßeinheit, gekoppelt ist. Somit kann bei Verschleiß oder falls ein anderes Werkzeug erforderlich ist, ein schneller Austausch erfolgen.

In zweckmäßiger Weise können die Ablängeeinrichtung und/oder die Schweißeinrichtung relativ zur Werkstückhalteeinrichtung schwingungsentkoppelt sein. Dadurch kann vermieden werden, dass Schwingungen oder Vibrationen, die beim Ablängen von Hairpin-Enden eines Stators an der Ablängeeinrichtung entstehen können, ein Verschweißen von Hairpin-Enden eines weiteren Stators an der Schweißeinrichtung negativ beeinflussen. So können die Ablängeeinrichtung und/oder die Schweißeinrichtung mittels Dämmelementen an der Werkstückhalteeinrichtung gekoppelt sein, bspw. Dämmelementen aus Gummi (z.B. sogen. "Silent-Blocks"). Ebenfalls denkbar ist, dass an der Werkstückhalteeinrichtung benachbart zur Ablängeeinrichtung ein Schwingungsgenerator angeordnet ist. Der Schwingungsgenerator kann derart eingerichtet sein, dass dieser Schwingungen bzw. Vibrationen, die durch die Ablängeeinrichtung erzeugt werden, erfasst und entsprechend gegenphasige Schwingungen bzw. Vibrationen erzeugt. Auch damit lassen sich Schwingungen bzw. Vibrationen reduzieren.

Im Rahmen einer bevorzugten Ausgestaltung kann die Schweißeinrichtung eine Antriebseinheit (bspw. eine Lineareinheit) aufweisen, mittels der die Schweißeinrichtung zur Maskierscheibe der sich an der Schweißeinrichtung befindenden Statoraufnahme hin bewegt werden kann (Fokussieren) und/oder parallel zu einer Ebene bewegt werden kann, die durch die Maskierscheibe definiert ist. Somit kann die Schweißeinrichtung zum Verschweißen der Hairpin-Enden entsprechend verfahren werden. Zum Verschwenken der Werkstückhalteeinrichtung kann die Schweißeinrichtung aus dem Schwenkbereich der Werkstückhalteeinrichtung herausgefahren werden.

In zweckmäßiger Weise kann die Schweißeinrichtung einen Drehantrieb aufweisen, der mit der Antriebseinheit gekoppelt ist, so dass die Antriebseinheit verschwenkt werden kann. Somit kann die Schweißeinrichtung nicht nur translatorisch verfahren werden (Antriebseinheit), sondern durch den Drehantrieb auch rotiert werden. Der Drehantrieb kann die Antriebseinheit aufnehmen und mit der Antriebseinheit gekoppelt sein. Der Drehantrieb oder die Antriebseinheit können an dem bspw. von der Basis abragenden Gestell der Vorrichtung befestigt sein.

In vorteilhafter Weise kann die Schweißeinrichtung eine verlagerbare, bspw. verschwenkbare, Schutzhaube (Schweißhaube) aufweisen, mittels der der Arbeitsbereich der Schweißeinrichtung nach außen hin zumindest weitgehend abgeschlossen werden kann. Dadurch kann die Umgebung der Schweißeinrichtung weitgehend vor Schweißeinflüssen (Rauch, Funken, Schmauch, Schweißspritzer, etc.) geschützt werden. Unter der Schutzhaube kann gegenüber der Umgebung ggf. ein Unterdruck ausgebildet werden.

In zweckmäßiger Weise kann die Schweißeinrichtung eine Energiestrahlschmelzschweißeinheit aufweisen. Damit ist ein sicherer und zuverlässiger Schweißvorgang möglich. Bei der Schweißeinrichtung kann es sich um eine Laserstrahlschweißeinheit, eine Elektronenstrahlschweißeinheit, eine Widerstandsschweißeinheit oder eine s.g. WIG-Schweißeinheit handeln.

Im Rahmen einer bevorzugten Ausgestaltung kann an der Schweißeinrichtung ein Kamerasystem zur Erfassung von verschweißten Hairpin-Enden vorgesehen sein. Somit kann ein Verschweißen der Hairpin-Enden überwacht werden. Eine optische Qualitätskontrolle der verschweißten Hairpin-Enden kann erfolgen, bspw. durch optische Analyse der Schweißperlenausformung.

In vorteilhafter Weise kann eine Absaugeinrichtung vorgesehen sein, die den Arbeitsbereich der Schweißeinrichtung absaugt. Somit können beim Schweißen entstehende Emissionen, bspw. Schmauch, entsprechend abgeführt werden. Die Absaugeinrichtung kann ein Absaugende aufweisen, welches mit dem Arbeitsbereich der Schweißeinrichtung, bspw. mit dem Raum unterhalb der Schutzhaube, strömungsverbunden ist.

Die eingangs genannte Aufgabe wird zudem durch ein Verfahren zum Ablängen und Verschweißen von Hairpins von Statoren (von Elektromotoren) mittels einer Vorrichtung nach einem oder mehreren der voranstehenden Aspekte gelöst.

Das Verfahren weist die folgenden Schritte auf:
- Einbringen eines ersten Stators in eine erste Statoraufnahme einer Werkstückhalteeinrichtung, so dass Hairpins des ersten Stators mit ihren freien Enden insbesondere paarweise aus Öffnungen einer Maskierscheibe der ersten Statoraufnahme herausragen,
- Ablängen der aus der Maskierscheibe herausragenden freien Enden der Hairpins des ersten Stators auf eine definierte Länge (definierter Überstand der Hairpins bezogen auf die Maskierscheibe) mittels einer Ablängeeinrichtung,
- Verschwenken der Werkstückhalteeinrichtung, wobei der erste Stator von der Ablängeeinrichtung zu einer Schweißeinrichtung verlagert wird,
- Verschweißen der aus der Maskierscheibe der ersten Statoraufnahme herausragenden Enden der Hairpins des ersten Stators mittels der Schweißeinrichtung,
- Einbringen eines zweiten Stators in eine zweite Statoraufnahme der Werkstückhalteeinrichtung, so dass Hairpins des zweiten Stators mit ihren freien Enden insbesondere paarweise durch Öffnungen einer an der zweiten Statoraufnahme vorgesehenen Maskierscheibe herausragen, und
- Ablängen von aus der Maskierscheibe herausragenden freien Enden der Hairpins des zweiten Stators auf eine definierte Länge (definierter Überstand der Hairpins bezogen auf die Maskierscheibe) mittels der Ablängeeinrichtung.

Hinsichtlich der damit erzielbaren Vorteile sei auf die diesbezüglichen Ausführungen zur Vorrichtung verwiesen. Zur weiteren Ausgestaltung des Verfahrens können die im Zusammenhang mit der Vorrichtung beschriebenen und/oder nachfolgend noch erläuterten Maßnahmen dienen.

Im Rahmen einer bevorzugten Ausgestaltung kann das Verschweißen der Enden der Hairpins des ersten Stators und das Ablängen der Enden der Hairpins des zweiten Stators teilweise oder vollständig gleichzeitig erfolgen (teilweise oder vollständige zeitliche Überlappung von Verschweißen und Ablängen). Somit können zwei Statoren gleichzeitig bearbeitet werden. Dies trägt zu einer kurzen Bearbeitungszeit und somit einer kurzen Durchlaufzeit der Statoren bei.

In zweckmäßiger Weise kann der erste Stator nach einem Einbringen in die erste Statoraufnahme in dieser gehalten und gespannt werden und/oder der zweite Stator kann nach einem Einbringen in die zweite Statoraufnahme in dieser gehalten und gespannt werden. Somit sind die Statoren nicht nur in der jeweiligen Statoraufnahme angeordnet, sondern auch darin gehalten und gespannt. Nach einem Einbringen des Stators in der jeweiligen Statoraufnahme wird die Spannung insbesondere solange aufrechterhalten, bis der Stator wieder aus der Statoraufnahme entnommen wird. Die Spannung wird insbesondere über ein Ablängen und ein Verschweißen der Hairpin-Enden des Stators aufrechterhalten (Stator wird einmal in der Statoraufnahme verspannt und in dieser Verspannung abgelängt und verschweißt).

In vorteilhafter Weise kann das Ablängen der Enden der Hairpins entlang der Schwerkraftrichtung von unterhalb der Werkstückhalteeinrichtung erfolgen und/oder das Verschweißen der Enden der Hairpins kann entlang der Schwerkraftrichtung von oberhalb der Werkstückhalteeinrichtung erfolgen. Indem ein Bearbeitungsvorgang (Ablängen) "von unten" erfolgt und ein Bearbeitungsvorgang (Schweißen) "von oben", beeinflussen sich diese Bearbeitungsvorgänge nicht oder nur in vernachlässigbarer Weise. Dies trägt zu einer hohen Prozesssicherheit und einer hohen Bearbeitungsqualität bei.

Im Rahmen einer bevorzugten Ausgestaltung kann nach einem Einbringen des Stators in der Statoraufnahme der Stator axial verspannt werden und danach die Enden der Hairpins an der Maskierscheibe verspannt werden. Somit erfolgt eine Verspannung des Stators insgesamt und eine Verspannung der Hairpin-Enden unabhängig voneinander. Dies trägt zu einer besonders präzisen Verspannung der Hairpin-Enden bei.

In zweckmäßiger Weise kann nach einem Verschweißen der Enden des ersten Stators und einem Ablängen der Enden des zweiten Stators die Werkstückhalteeinrichtung verschwenkt werden, wobei der erste Stator von der Schweißeinrichtung zur Ablängeeinrichtung verlagert wird, wo der erste Stator aus der ersten Statoraufnahme entnommen wird. Somit werden die in der Ablängeeinrichtung und der Schweißeinrichtung angeordneten Statoren erneut ausgetauscht. Der erste Stator, dessen Hairpin-Enden verschweißt sind, kann somit aus der ersten Statoraufnahme entnommen werden. Ein Einbringen und Entnehmen des Stators erfolgt dann, wenn die betreffende Statoraufnahme im Arbeitsbereich der bzw. an der Ablängeeinrichtung angeordnet ist.

In vorteilhafter Weise kann vor einer Entnahme des ersten Stators aus der ersten Statoraufnahme die Verspannung der Enden der Hairpins an der Maskierscheibe gelöst werden und danach die axiale Verspannung des Stators in der Statoraufnahme gelöst werden. Somit kann verhindert werden, dass sich der Stator beim Lösen der Verspannung an den Hairpin-Enden auf unerwünschte Weise bewegt. Dies reduziert das Risiko, dass beim Lösen der Verspannung Schäden entstehen.

In zweckmäßiger Weise kann nach einer Entnahme des ersten Stators aus der ersten Statoraufnahme die Maskierscheibe der ersten Statoraufnahme gereinigt werden. Somit können eventuelle Bearbeitungsrückstände an der Maskierscheibe, bspw. Schweißrückstände, die eine Anordnung oder Bearbeitung eines weiteren Stators negativ beeinflussen könnten, entfernt werden. Dies begünstigt die Prozesssicherheit. Eine Reinigung kann bei jeder Entnahme eines Stators aus der Statoraufnahme erfolgen oder nach einer gewissen Anzahl von Arbeitsgängen. Eine Reinigung der Maskierscheibe kann durch eine Reinigungseinrichtung der Ablängeeinrichtung erfolgen, wie oben beschrieben.

In vorteilhafter Weise kann nach einer Entnahme des ersten Stators aus der ersten Statoraufnahme, ggf. nach einer Reinigung der Maskierscheibe der ersten Statoraufnahme, ein weiterer Stator in die erste Statoraufnahme der Werkstückhalteeinrichtung eingebracht werden. Somit kann ein weiterer Stator zugeführt werden, der in der Vorrichtung bearbeitet wird.

Die eingangs genannte Aufgabe wird auch durch einen Stator gelöst, der nach dem beschriebenen Verfahren hergestellt ist.

Der Stator weist einen Statorkörper mit sich insbesondere entlang einer Axialrichtung erstreckenden Durchgängen auf, in die Hairpins eingebracht sind. Die Enden der Hairpins werden wie oben beschrieben abgelängt und insbesondere paarweise miteinander verschweißt.

Hinsichtlich der damit erzielbaren Vorteile sei auf die diesbezüglichen Ausführungen zur Vorrichtung bzw. zum Verfahren verwiesen. Zur weiteren Ausgestaltung des Stators können die im Zusammenhang mit der Vorrichtung bzw. dem Verfahren beschriebenen und/oder nachfolgend noch erläuterten Maßnahmen dienen.

Die Erfindung wird nachfolgend anhand der Figuren näher erläutert, wobei gleiche oder funktional gleiche Elemente mit identischen Bezugszeichen versehen sind, ggf. jedoch lediglich einmal. Es zeigen:
Fig.1 eine Vorrichtung zum Ablängen und Verschweißen von Hairpin-Enden an Statoren in einer perspektivischen Ansicht;
Fig.2 eine Statoraufnahme der Werkstückhalteeinrichtung der Vorrichtung aus Figur 1 in einer perspektivischen Ansicht mit Blick auf die Seite, von der ein Stator in die Statoraufnahme eingebracht wird (Ansicht eines Endes der Statoraufnahme);
Fig.3 die Statoraufnahme aus Figur 2 in einer perspektivischen Ansicht mit Blick auf die Maskierscheibe (Ansicht des anderen Endes der Statoraufnahme);
Fig.4 die Werkstückhalteeinrichtung der Vorrichtung aus Figur 1 zusammen mit der Ablängeeinrichtung in einer schematischen Schnittansicht;

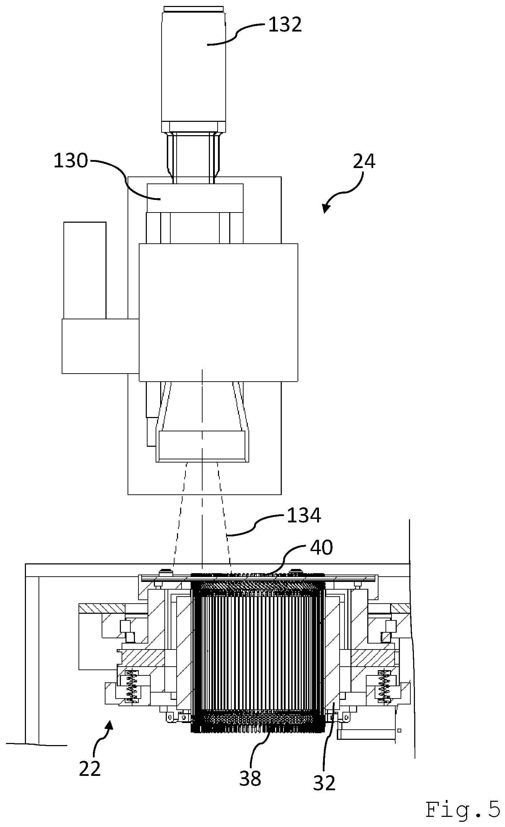

Fig.5 die Werkstückhalteeinrichtung der Vorrichtung aus Figur 1 zusammen mit der Schweißeinrichtung in einer schematischen Schnittansicht; und
Fig.6a-d mögliche Ausgestaltungen der Stoßmeißel der Ablängeeinrichtung der Vorrichtung aus Figur 1.

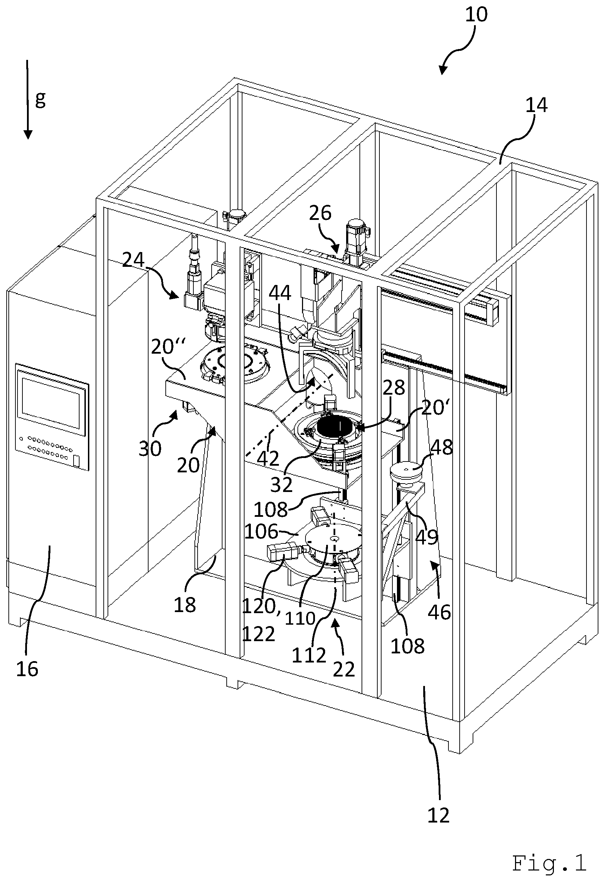

Figur 1 zeigt eine Vorrichtung zum Ablängen und Verschweißen von Hairpin-Enden an Statoren für Elektromotoren, wobei die Vorrichtung insgesamt mit dem Bezugszeichen 10 bezeichnet ist.

Die Vorrichtung 10 ist im Beispiel auf einer Basis 12 in Form einer Grundplatte angeordnet. Auf der Basis 12 ist ein Rahmen 14 angeordnet, an dem Verkleidungselemente befestigt sein können (nicht dargestellt). Auf der Basis 12 ist zudem ein Schaltschrank 16 angeordnet, in dem Komponenten zur Steuerung und oder Energieversorgung der Vorrichtung 10 angeordnet sein können.

Die Vorrichtung 10 weist ein Gestell 18 auf, an dem Komponenten der Vorrichtung 10 angeordnet und/oder befestigt sind. Die Vorrichtung 10 weist als grundsätzliche Komponenten eine verschwenkbare Werkstückhalteeinrichtung 20 für Statoren, eine Ablängeeinrichtung 22, eine Schweißeinrichtung 24 und eine Handhabungseinrichtung 26 zur Handhabung von Statoren auf. Die Ablängeeinrichtung 22 ist entlang der Schwerkraftrichtung g unterhalb der Werkstückhalteeinrichtung 20 angeordnet. Die Schweißeinrichtung 24 ist entlang der Schwerkraftrichtung g oberhalb der Werkstückhalteeinrichtung 20 angeordnet.

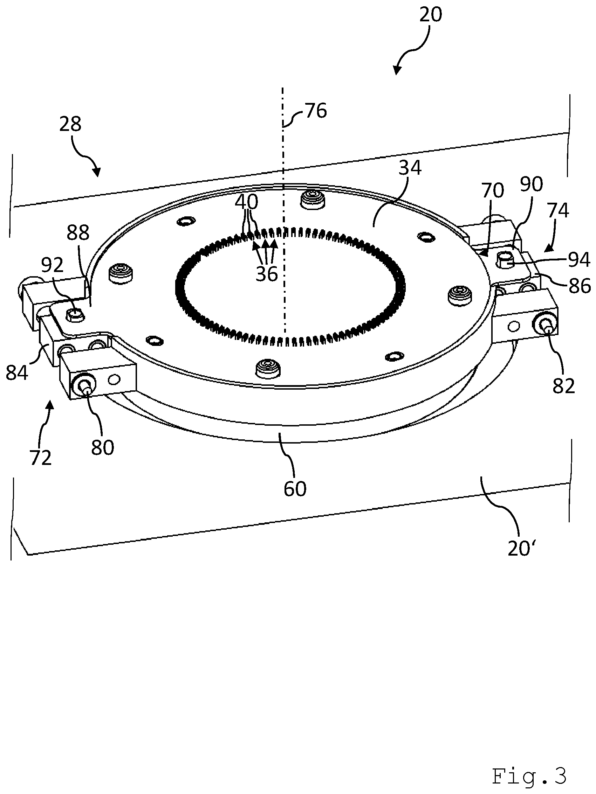

Die Werkstückhalteeinrichtung 20 weist zwei Statoraufnahmen 28, 30 zum Halten und Spannen von jeweils einem Stator 32 auf (vgl. Fig.1). An jeder Statoraufnahme 28, 30 ist eine Maskierscheibe 34 mit Öffnungen 36 vorgesehen, durch die bei in der Statoraufnahme 28, 30 angeordnetem Stator 32 jeweils Hairpins 38 des Stators 32 mit ihren freien Enden 40 insbesondere paarweise herausragen (vgl. Fig.3).

Die Ablängeeinrichtung 22 dient zum Ablängen von aus der Maskierscheibe 34 herausragenden freien Enden 40 der Hairpins 38 auf eine definierte Länge (definierter Überstand der Hairpins 38 bezogen auf die Maskierscheibe 34). Die Schweißeinrichtung 24 dient zum insbesondere paarweisen Verschweißen der aus der Maskierscheibe 34 herausragenden freien Enden 40 der Hairpins 38 (vgl. Fig.1).

Die Werkstückhalteeinrichtung 20 ist schwenkbar um eine Schwenkachse 42 gelagert, so dass ein in der Statoraufnahme 28 angeordneter Stator 32 durch einen Schwenkvorgang der Werkstückhalteeinrichtung 20 von der Ablängeeinrichtung 22 zur Schweißeinrichtung 24 und/oder von der Schweißeinrichtung 24 zur Ablängeeinrichtung 22 verlagert werden kann. Die Schwenkachse 42 ist im Beispiel parallel zur Basis 12 angeordnet und damit ggf. horizontal orientiert.

Die Werkstückhalteeinrichtung 20 ist mittels einer Lagerung 44 schwenkbar am Gestell 18 gelagert, wobei die Lagerung 44 im Beispiel als einseitige Lagerung ausgebildet ist ("fliegende Lagerung"). Die Werkstückhalteeinrichtung 20 kann zwischen zwei Schwenkstellungen bzw. Arbeitsstellungen verschwenkt werden. In einer ersten Schwenkstellung befindet sich die erste Statoraufnahme 28 im Arbeitsbereich an der Ablängeeinrichtung 22 und die zweite Statoraufnahme 30 befindet sich an der Schweißeinrichtung 24 (vgl. Fig.1). In der zweiten Schwenkstellung befindet sich die erste Statoraufnahme 28 an der Schweißeinrichtung 24 und die zweite Statoraufnahme 30 an der Ablängeeinrichtung 22 (nicht dargestellt). Die erste Schwenkstellung und die zweite Schwenkstellung liegen im Beispiel um einen Schwenkwinkel von 180° auseinander.

Die Werkstückhalteeinrichtung 20 weist zwei Abschnitte 20', 20'' auf, die entlang einer orthogonal zur Schwenkachse 42 orientierten und im Beispiel zur Schwerkraftrichtung g parallelen Achse (nicht gezeigt) versetzt zueinander angeordnet sind (vgl. Fig.1). Die erste Statoraufnahme 28 ist im Abschnitt 20' angeordnet und die zweite Statoraufnahme 30 im Abschnitt 20".

Die Statoraufnahmen 28, 30 bzw. die Mittellängsebenen der Statoraufnahmen 28, 30 sind im Beispiel parallel zueinander angeordnet. Ist in beiden Statoraufnahmen 28, 30 ein Stator 32 angeordnet, sind die Mittellängsachsen der Statoren 32 parallel zueinander orientiert. Die Statoraufnahmen 28, 30 sind im Beispiel derart orientiert, dass bezogen auf die in Figur 1 gezeigte Schwenkstellung die erste Statoraufnahme 28 relativ zur Werkstückhalteeinrichtung 20 bzw. zur Schwerkraftrichtung g nach oben orientiert ist (Statoraufnahme 28 nach oben hin offen, d.h. Stator 32 befindet sich teilweise oberhalb der Statoraufnahme 28) und dass die zweite Statoraufnahme 30 relativ zur Werkstückhalteeinrichtung 20 bzw. zur Schwerkraftrichtung g nach unten orientiert ist (Statoraufnahme 30 nach unten hin offen, d.h. Stator 32 befindet sich teilweise unterhalb der Statoraufnahme 30).

Die Werkstückhalteeinrichtung 20, die Ablängeeinrichtung 22 und die Schweißeinrichtung 24 sind derart zueinander angeordnet, dass wenn sich eine der Statoraufnahmen 28, 30 an der Ablängeeinrichtung 22 befindet, sich die andere Statoraufnahme 30, 28 an der Schweißeinrichtung 24 befindet. Somit ist eine zeitlich überlappende Bearbeitung von Statoren 32 in der Ablängeeinrichtung 22 und in der Schweißeinrichtung 24 möglich.

Wie bereits angedeutet, ist die Schwenkachse 42 der Werkstückhalteeinrichtung 20 zwischen den beiden Statoraufnahmen 28, 30 angeordnet, wobei, wenn sich eine der Statoraufnahmen 28, 30 an der Ablängeeinrichtung 22 befindet, die Ablängeeinrichtung 22 auf einer Seite der Werkzeughalteeinrichtung 20 (entlang der Schwerkraftrichtung g nach unten) und die Schweißeinrichtung 24 auf der gegenüberliegenden Seite der Werkzeughalteeinrichtung 20 (entlang der Schwerkraftrichtung g nach oben) angeordnet ist. Somit ist ein Einwechseln der an der Ablängeeinrichtung 22 und der Schweißeinrichtung 24 angeordneten Statoren 32 lediglich durch einen Schwenkvorgang möglich.

Die Handhabungsvorrichtung 26 dient zur Handhabung eines Stators 32 und kann bspw. als Portalhandlingsystem ausgebildet sein (vgl. Fig.1). Die Handhabungseinrichtung 26 kann mit dem Gestell 18 oder mit dem Rahmen 14 gekoppelt sein. Neben der Handhabungseinrichtung kann die Vorrichtung 10 eine Übergabestation zum Ablegen eines Stators 32 aufweisen (nicht dargestellt), wobei die Handhabungseinrichtung 26 dazu eingerichtet ist, um einen Stator 32 aufzunehmen und von der Übergabestation zu der sich an der Ablängeeinrichtung 22 befindenden Statoraufnahme 28 zu verlagern und/oder von der sich an der Ablängeeinrichtung 22 befindenden Statoraufnahme 28 zu der Übergabestation zu verlagern. Dies erleichtert ein Positionieren der Statoren 32 in einer Statoraufnahme 28, 30. Zudem ist hiermit ein definierter Übergabepunkt geschaffen.

Die Ablängeeinrichtung 22 weist eine verschwenkbare Reinigungseinrichtung 46 auf, mittels der die Maskierscheibe 34 der sich an der Ablängeeinrichtung 22 befindenden Statoraufnahme 28 gereinigt werden kann (vgl. Fig.1). Die Reinigungseinrichtung 46 weist im Beispiel eine drehbare Bürsteneinheit 48 (bspw. mit einer angetriebenen Topfbürste) auf, die mittels eines Arms 49 (Schwenkarm 49) in den Bereich der Maskierscheibe 34 eingeschwenkt werden kann.

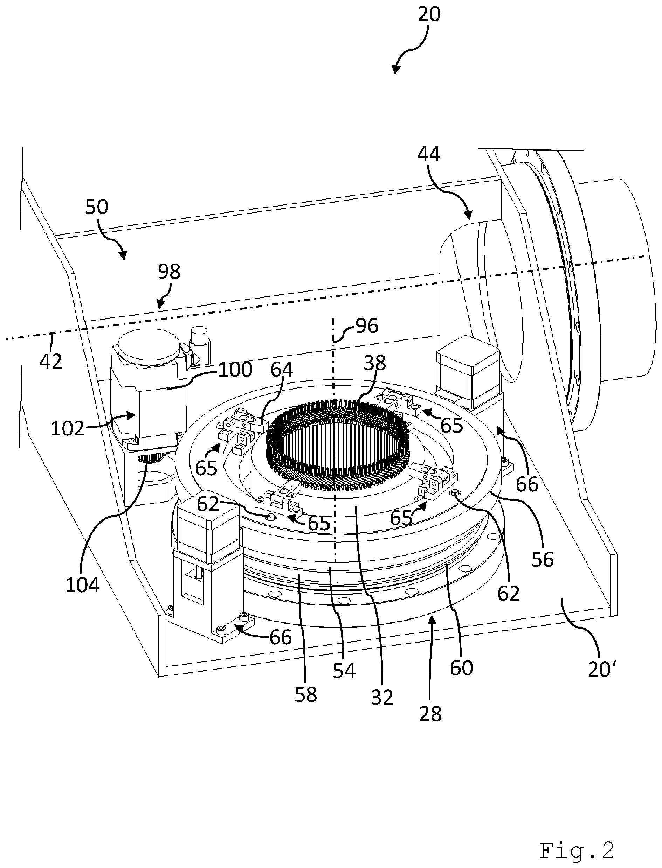

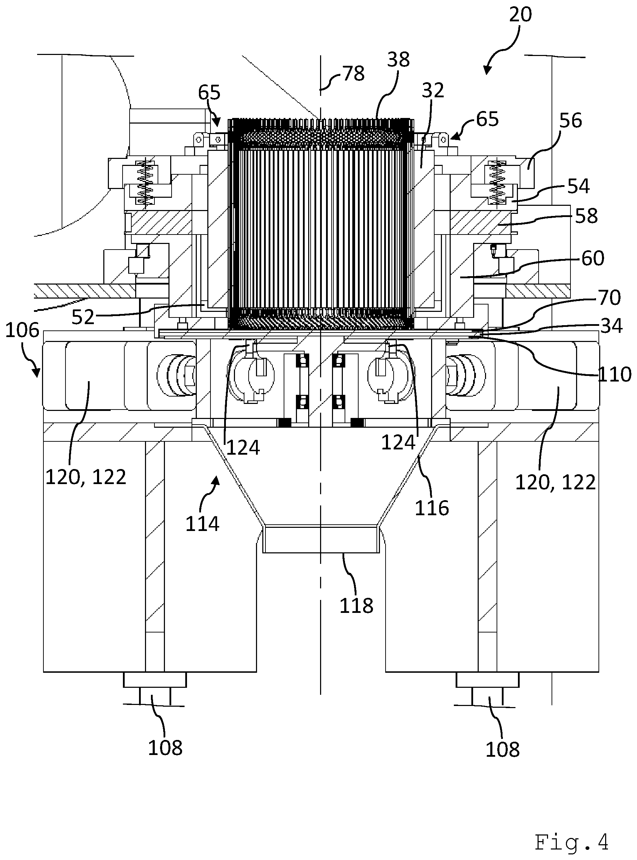

An den Statoraufnahmen 28, 30 ist jeweils eine Spanneinrichtung 50 angeordnet, mittels der der Stator 32 in der Statoraufnahme 28, 30 axial (entlang der Mittellängsachse des Stators 32) verspannbar ist (vgl. Fig.2). Zur Maskierscheibe 34 der Statoraufnahme 28 hin kann eine Statoranlage 52 (Anschlag 52) angeordnet sein (vgl. Fig.4). Die Spanneinrichtung 50 wirkt auf das aus der Statoraufnahme 28 herausragende Ende des Stators 32, so dass der Stator 32 bei aktivierter Spanneinrichtung 50 gegen die Statoranlage 52 gedrückt bzw. verspannt wird.

Im Beispiel weist die Spanneinrichtung 50 ein Basisteil 54 in Form eines Basisrings 54 und ein axial relativ zum Basisteil 54 bewegliches Spannteil 56 in Form eines Spannrings 56 auf (vgl. Fig.2 und 4). Der Basisring 54 kann mit einer Riemenscheibe 58 und/oder einer drehbaren Buchse 60 drehfest gekoppelt sein (vgl. Fig.4). Zwischen dem Basisring 54 und dem beweglichen Spannring 56 können Stifte 62 zur Führung des Spannteils 56 relativ zum Basisteil 54 und/oder Federn zur Bereitstellung einer Vorspannung angeordnet sein (nicht gezeigt).

Die Spanneinrichtung 50 weist im Beispiel vier Spannhebel 65 auf, die auf den Stator 32 wirken. Die Spannhebel 65 sind jeweils gelenkig mit dem Basisring 54 und dem Spannring 56 gekoppelt. Ein radial nach innen ragender Abschnitt 64 des Spannhebels 65 kann mit dem Stator 50 in Kontakt gelangen. Wird der Spannring 56 axial vom Basisring 54 wegbewegt, wird der nach innen ragende Abschnitt 64 des Spannhebels 65 nach unten verschwenkt und spannt dadurch den Stator 32.

Zum Antrieb der Spanneinrichtung 50 sind im Beispiel zwei bezogen auf den Spannring 56 einander gegenüberliegend angeordnete Spannantriebseinrichtungen 66 vorgesehen, die an der Werkstückhalteeinrichtung 20 befestigt sind und auf den Spannring 56 wirken. Die Spannantriebseinrichtungen 66 können als elektrischer Stellmotor oder als Pneumatikzylinder ausgebildet sein.

An den Statoraufnahmen 28, 30 angrenzend (axial nach innen versetzt) an die Maskierscheibe 34 ist jeweils eine Spannscheibe 70 angeordnet (vgl. Fig.3 und 4). Die Spannscheibe 70 weist Öffnungen auf, durch die dann, wenn in der Statoraufnahme 28, 30 ein Stator 32 angeordnet bzw. gehalten ist, jeweils Hairpins des Stators 32 insbesondere paarweise hindurchragen. Im Beispiel sind zwei Antriebseinheiten 72, 74 vorgesehen, mittels der die Maskierscheibe 34 und die Spannscheibe 70 relativ zueinander verdrehbar sind. Dadurch können die Hairpin-Enden gespannt werden.

Die Öffnungen in der Spannscheibe 70 (nicht dargestellt) und in der Maskierscheibe 34 sind teilweise oder vollständig identisch ausgebildet (teilweise oder vollständig identisches "Lochmuster"). Zum Einbringen eines Stators 32 fluchten die Öffnungen in der Maskierscheibe 34 und der Spannscheibe 70 miteinander, so dass die Hairpin-Enden des Stators 32 durch die Öffnungen hindurchgeführt werden können. Zum Verspannen der Hairpin-Enden werden die Spannscheibe 70 und die Maskierscheibe 34 relativ zueinander verdreht.

Das Verspannen kann vor einem Ablängen erfolgen und bis nach dem Schweißen aufrechterhalten werden. Somit behalten die Hairpin-Enden beim Ablängen und beim Verschweißen Ihre Position bei. Die Maskierscheibe 34 und/oder die Spannscheibe 70 können um eine Schwenkachse 76 gedreht werden (vgl. Fig.3), die zur Mittellängsachse 78 eines in der Statoraufnahme 28 angeordneten Stators 32 parallel oder kongruent ist (vgl. Fig.4).

Die Antriebseinheiten 72, 74 sind im Beispiel jeweils als elektromotorisch angetriebene Spindeleinheit mit einer Spindel 80, 82 ausgebildet (vgl. Fig.3). Auf der Spindel 80, 82 läuft jeweils ein Schlitten 84, 86, der mit der Maskierscheibe 34 oder der Spannscheibe 70 gekoppelt ist. Die Maskierscheibe 34 und die Spannscheibe 70 weisen jeweils eine radial abragende Lasche 88, 90 auf, die bspw. mittels eines Stifts oder einer Schraube 92, 94 mit dem Schlitten 84, 86 gekoppelt ist. Die Antriebseinheiten 72, 74 sind jeweils an der drehbaren Buchse 60 angeordnet oder mit dieser gekoppelt.

Die Statoraufnahmen 28, 30 sind jeweils um eine bezogen auf die Werkstückhalteeinrichtung 20 normale Achse 96 drehbar an der Werkstückhalteeinrichtung 20 gelagert (vgl. Fig.1 und 2). Es ist jeweils ein Drehantrieb 98 vorgesehen, durch den die Statoraufnahme 28, 30 relativ zur Werkstückhalteeinrichtung 20 gedreht werden kann. Somit kann die Drehstellung der Statoraufnahme 38, 30 bzw. des Stators 32 relativ zur Werkstückhalteeinrichtung 20 angepasst werden.

Der Drehantrieb 98 ist im Beispiel als Riemenantrieb ausgebildet. Der Drehantrieb 98 weist als Antriebsquelle einen Elektromotor 100 auf, der mit einem auf der Motorwelle 102 drehfest angeordneten, Antriebsritzel 104 gekoppelt ist (vgl. Fig.2 und 4). An der Statoraufnahme 28, 30 ist eine drehfest mit der Statoraufnahme 28, 30 gekoppelte Riemenscheibe 58 oder ein entsprechender Riemenscheibenabschnitt 58 vorgesehen. Das Antriebsritzel 104 und die Riemenscheibe bzw. der Riemenscheibenabschnitt 58 sind mittels eines Antriebsriemens gekoppelt (nicht gezeigt). Eine teilweise Drehung, bspw. um 90°, kann ggf. ausreichend sein, wenn die Ablängeeinrichtung 22 mehrere, bspw. vier, Ablängeeinheiten aufweist.

Die Ablängeeinrichtung 22 ist im Beispiel auf einer entlang der Schwerkraftrichtung g verfahrbaren Konsole 106 angeordnet (vgl. Fig.1), wobei die Ablängeeinrichtung 22 durch Verfahren der Konsole 106 entlang der Schwerkraftrichtung g (Verfahrrichtung) zur Maskierscheibe 34 der sich an der Ablängeeinrichtung 22 befindenden Statoraufnahme 28 herangeführt und/oder von der Maskierscheibe 34 dieser Statoraufnahme 28 weggeführt werden kann. Somit kann die Ablängeeinrichtung 22 zum Ablängen an die Maskierscheibe 34 verfahren werden. Werden keine Hairpin-Enden abgelängt, kann die Ablängeeinrichtung 22 von der Maskierscheibe 34 weg verfahren werden, um ein Verschwenken der Werkstückhalteeinrichtung 22 nicht zu behindern.

Die Konsole 106 kann Führungselemente aufweisen, die an entlang der Schwerkraftrichtung g (Verfahrrichtung) ausgerichteten Führungsschienen 108 geführt sind. Die Führungsschienen 108 sind an dem sich bspw. von der Basis 12 der Vorrichtung 10 erstreckenden Gestell 18 angeordnet.

Zum Antrieb der Konsole 106 kann ein Elektromotor oder ein pneumatischer Zylinder vorgesehen sein (nicht dargestellt).

Die Ablängeeinrichtung 22 weist eine Distanzscheibe 110 auf (vgl. Fig.1 und 4), die beim Ablängen von Hairpin-Enden an der Maskierscheibe 34 der Statoraufnahme 28, die sich an der Ablängeeinrichtung 22 befindet, anliegt oder um ein definiertes Maß von dieser beabstandet ist. Die Ablängeeinrichtung 22 ist derart ausgebildet, dass ein Ablängen der Hairpin-Enden an der von der Maskierscheibe 34 abgewandten Seite der Distanzscheibe 110 erfolgt (vgl. Fig.4). Somit kann durch die Distanzscheibe 110 die Länge der Hairpin-Enden vorgegeben werden. Die Distanzscheibe 110 weist Öffnungen auf (nicht gezeigt), durch die dann, wenn die Ablängeeinrichtung 22 an eine mit einem Stator 32 bestückte Statoraufnahme 28 herangeführt wird, die Hairpin-Enden durch die Öffnungen durchdringen. Die Distanzscheibe 110 kann auswechselbar ausgebildet sein, insbesondere mittels einer Schnellwechseleinrichtung (nicht gezeigt).

Die Distanzscheibe 110 ist in der Ablängeeinrichtung 22 drehbar um ihre Mittellängsachse 112 gelagert. Somit kann die Distanzscheibe 110 mit der Statoraufnahme 28 bzw. deren Maskierscheibe 34 mitdrehen. Die Mittellängsachse 112 der Distanzscheibe 110 ist parallel oder kongruent zur Mittellängsachse des in der Statoraufnahme 28 gehaltenen Stators 32 und/oder zur Rotationsachse der sich an der Ablängeeinrichtung befindenden Statoraufnahme 28 angeordnet.

Es kann eine vorzugsweise pneumatisch betätigte Verriegelungseinheit vorgesehen sein, mittels der die Distanzscheibe 110 in ihrer Drehstellung relativ zur Ablängeeinrichtung 22 feststellbar ist (nicht dargestellt). Somit kann die Distanzscheibe 110 in einer definierten Drehstellung gehalten werden.

Entlang der Schwerkraftrichtung g unterhalb der Ablängeeinrichtung 22 ist eine Auffangeinrichtung 114 zum Auffangen und Sammeln von abgetrennten Hairpin-Enden angeordnet (vgl. Fig.4). Die Auffangeinrichtung 114 weist ein sich vorzugsweise konisch verjüngendes Sammelrohr 116, bspw. einen Trichter, auf, das in eine Ausgabeöffnung 118 mündet. An oder unterhalb der Ausgabeöffnung 118 kann ein entnehmbarer Sammelbehälter vorgesehen sein (nicht gezeigt). Zur Überwachung und/oder Qualitätskontrolle kann optional an der Ablängeeinrichtung 22 ein Kamerasystem zur Erfassung von abgelängten Hairpin-Enden vorgesehen sein (nicht dargestellt).

Die Ablängeeinrichtung 22 weist im Beispiel vier über den Umfang der Distanzscheibe 110 regelmäßig verteilte (bspw. in gleichen Winkeln zueinander angeordnete) Ablängeeinheiten 120 aufweisen, mittels denen die Hairpin-Enden abgetrennt werden. Die Ablängeeinheiten 120 sind im Beispiel als pneumatisch betätigte Stoßeinheit 122 in Form eines Hubzylinders ausgebildet, die jeweils einen Stoßmeißel 124 antreiben, der die Hairpin-Enden abtrennt.

Durch die vier Ablängeeinheiten 120 kann ein gleichzeitiges Ablängen von Hairpin-Enden an mehreren Stellen erfolgen. Die Statoraufnahme 28, die sich an der Ablängeeinrichtung 22 befindet, und die Ablängeeinrichtung 22 können derart miteinander zusammenwirken, dass die Ablängeeinheiten 120 jeweils die in einer radial angeordneten Hairpin-Enden ablängt, ggf. zurückfährt, und die Statoraufnahme 28 mittels deren Drehantrieb 98 um einen definierten Winkel rotiert wird, so dass die Ablängeeinheiten 120 die nächste radiale Reihe mit Hairpin-Enden ablängen kann. Bei vier Ablängeeinheiten können diese bspw. im Winkel von jeweils 90° zueinander angeordnet sein (vgl. Fig.1). Die Statoraufnahme kann während dem Ablängen der Hairpin-Enden schrittweise um bis zu 90° rotiert werden.

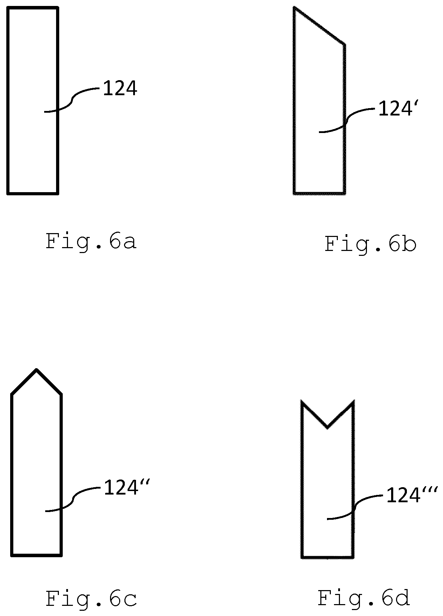

Bei Ausgestaltung der Ablängeeinheit 120 als Stoßeinheit können die Stoßmeißel 124 verschieden ausgebildet sein. So kann der Stoßmeißel 124 ein quaderförmiges Ende aufweisen (vgl. Fig.6a). Der Stoßmeißel 124' kann ein einfach angewinkeltes Ende aufweisen (vgl. Fig.6b). Der Stoßmeißel 124'' kann ein doppelt angewinkeltes oder dreieckförmiges Ende aufweisen (vgl. Fig.6c). Der Stoßmeißel 124‴ kann ein Ende mit einer V-förmigen Aussparung aufweisen (vgl. Fig.6d).

Ein Freiwinkel beschreibt den Winkel zwischen der Distanzscheibe 110 bzw. Maskierscheibe 34 und der dieser Scheibe zugewandten Fläche des Bearbeitungswerkzeugs der Ablängeeinheit 120, bspw. des Stoßmeißels 124 der als Stoßeinheit ausgebildeten Ablängeeinheit 120.

Grundsätzlich sollte der Freiwinkel klein gehalten werden, um einen schrägen Abschnitt von Hairpin-Enden möglichst zu vermeiden. Das Stoßen kann radial oder tangential erfolgen. Durch tangentiales Stoßen können besondere Hairpin-Enden ("Sonderpins") mit anderer Länge geschnitten werden. Das Stoßen bzw. Ablängen von Hairpin-Enden sollte trocken (ohne Schmiermittel) erfolgen, um Verschmutzungen zu vermeiden, die ein Schweißen beeinträchtigen könnten. Optional können die Stoßmeißel beschichtet sein.

Optional kann eine Schnellwechseleinrichtung vorgesehen sein, mittels der die Distanzscheibe 110 mit der Ablängeeinrichtung 22 gekoppelt ist (nicht dargestellt). Dies erlaubt einen schnellen Austausch der Distanzscheibe 110. Optional kann an den Ablängeeinheiten 120 jeweils eine Schnellwechseleinrichtung vorgesehen sein, mittels der ein Stoßmeißel 124 mit der Stoßeinheit 120 gekoppelt ist. Dies erlaubt einen schnellen Austausch eines Stoßmeißels 124.

Die Schweißeinrichtung 24 weist im Beispiel eine Antriebseinheit 130 auf, mittels der die Schweißeinrichtung 24 zur Maskierscheibe 34 der sich an der Schweißeinrichtung 24 befindenden Statoraufnahme 30 hinbewegt werden kann und/oder parallel zu einer Ebene bewegt werden kann, die durch die Maskierscheibe 34 definiert ist. Somit kann die Schweißeinrichtung 24 entsprechend translatorisch verfahren werden. Die Schweißeinrichtung 24 kann bspw. als eine Lineareinheit ausgebildet sein. Optional kann die Schweißeinrichtung 24 relativ zur Antriebseinheit 130 verschwenkbar ausgebildet sein, bspw. mittels einer Schwenkeinrichtung (Schwenkachse kann aus Zeichenebene der Figur 6 orthogonal herausragen). Dadurch kann die Schweißeinrichtung geneigt werden, um Beschädigungen durch Reflektion zu vermeiden.

Die Schweißeinrichtung 24 weist im Beispiel einen Drehantrieb 132 auf, der mit der Antriebseinheit 130 gekoppelt ist, so dass die Antriebseinheit 130 verschwenkt werden kann. Dadurch kann die Schweißeinrichtung 24 nicht nur translatorisch verfahren, sondern auch rotiert werden. Im Beispiel nimmt der Drehantrieb 132 die Antriebseinheit 130 auf, mit anderen Worten trägt der Drehantrieb 132 die Antriebseinheit 130. Der Arbeitsbereich der Schweißeinrichtung 24 trägt das Bezugszeichen 134.

Die Schweißeinrichtung 24 kann optional eine verlagerbare, bspw. verschwenkbare, Schutzhaube (Schweißhaube) aufweisen (nicht dargestellt). Die Schweißeinrichtung 24 kann eine Energiestrahlschmelzschweißeinheit (Laserstrahlschweißeinheit oder Elektronenstrahlschweißeinheit) aufweisen. Zur Überwachung und/oder Qualitätskontrolle kann an der Schweißeinrichtung 24 ein Kamerasystem zur Erfassung von verschweißten Hairpin-Enden vorgesehen sein (nicht dargestellt). Es kann eine Absaugeinrichtung vorgesehen sein, die den Arbeitsbereich der Schweißeinrichtung 24 absaugt (nicht gezeigt). Die Absaugeinrichtung kann ein Absaugende aufweisen, welches mit dem Arbeitsbereich der Schweißeinrichtung 24, bspw. mit dem Raum unterhalb der Schutzhaube, strömungsverbunden ist.

Das Verfahren zum Ablängen und Verschweißen von Hairpins an Statoren von Elektromotoren, bei welchem im Beispiel die oben beschriebene Vorrichtung 10 zum Einsatz kommt, arbeitet folgendermaßen:
Zunächst wird ein erster Stator 32 in die erste Statoraufnahme 28 der Werkstückhalteeinrichtung 20 eingebracht, so dass Hairpins des ersten Stators 32 mit ihren freien Enden insbesondere paarweise aus Öffnungen 36 der Maskierscheibe 34 der ersten Statoraufnahme 28 herausragen. Dieses Einbringen kann ggf. mittels der Handhabungseinrichtung 26 erfolgen, die den Stator 32 bspw. an einer Übergabestation aufnimmt, zur Statoraufnahme 28 verlagert und diesen in der ersten Statoraufnahme 28 positioniert.

Der erste Stator 32 wird nach einem Einbringen in die erste Statoraufnahme 28 in dieser gehalten und gespannt. Die Spannung wird solange aufrechterhalten, bis der Stator 32 nach abgeschlossener Bearbeitung wieder aus der Statoraufnahme 28 entnommen wird. Die Spannung wird insbesondere über ein Ablängen und ein Verschweißen der Hairpin-Enden 40 des Stators 32 hinweg aufrechterhalten.

Das Spannen des ersten Stators 32 in der Statoraufnahme 28 erfolgt derart, dass der Stator 32 zunächst axial verspannt und danach die 40 Enden der Hairpins 38 an der Maskierscheibe 34 verspannt werden. Das axiale Verspannen kann durch eine Spanneinrichtung 50 erfolgen, die den Stator 32 gegen eine Statoranlage 52 (Anschlag 52) verspannt. Das Verspannen der Hairpin-Enden 40 kann mittels der Maskierscheibe 34 und einer Spannscheibe 70 erfolgen, die jeweils Öffnungen aufweisen, durch die die Hairpin-Enden 40 hindurchragen, wobei die Maskierscheibe 34 und die Spannscheibe 70 relativ zueinander verdreht werden. Dadurch werden die Hairpin-Enden 40 verspannt.

Danach werden die aus der Maskierscheibe 34 herausragenden freien Enden 40 der Hairpins 38 des ersten Stators 32 mittels der Ablängeeinrichtung 22 auf eine definierte Länge (definierter Überstand der Hairpins bezogen auf die Maskierscheibe 34) abgelängt. Das Ablängen der Enden 40 der Hairpins 38 erfolgt entlang der Schwerkraftrichtung g von unterhalb der Werkstückhalteeinrichtung 20.

Zum Ablängen können bspw. die vier Stoßeinheiten 120 der Ablängeeinrichtung 22 aktiviert werden, die die Hairpin-Enden 40, die sich bezogen auf die jeweilige Stoßeinheit 120 in einer Flucht befinden (radiale Reihe von Hairpin-Enden 40), durch einen Stoßvorgang mit einem Stoßmeißel 124 kürzen (Vorschubbewegung). Nach erfolgter Vorschubbewegung werden die Stoßmeißel 124 zurückgezogen (Rückzugsbewegung) und die Statoraufnahme 28 wird mit dem Drehantrieb 98 so geschwenkt, dass sich die nächsten in einer radialen Reihe angeordneten Hairpin-Enden 40 in der Flucht mit den Stoßeinheiten 120 befinden. Die Stoßeinheiten 120 führen dann erneut eine Vorschubbewegung und eine Rückzugsbewegung durch. Im Beispiel erfolgt dies solange, bis alle Hairpin-Enden 40 abgelängt sind. Die Statoraufnahme 28 wird dabei um einen Winkel von 90° gedreht. Dadurch sind bei vier regelmäßig um die Maskierscheibe 34 angeordneten Stoßeinheiten 120 alle Hairpin-Enden 40 abgelängt.

Dann wird die Werkstückhalteeinrichtung 20 verschwenkt (im Beispiel um 180°), wobei der erste Stator 32 von der Ablängeeinrichtung 22 zur Schweißeinrichtung 24 verlagert wird. Die aus der Maskierscheibe 34 der ersten Statoraufnahme 28 herausragenden (abgelängten) Enden der Hairpins des ersten Stators 32 werden mittels der Schweißeinrichtung 24 insbesondere paarweise verschweißt. Hierzu wird die Schweißeinrichtung 24 aktiviert und mit der Antriebseinheit 130 und dem Drehantrieb 132 entsprechend relativ zur Maskierscheibe 34 bewegt, so dass die Schweißeinrichtung 24 die abgelängten Hairpin-Enden 40 verschweißt. Das Verschweißen der Enden 40 der Hairpins 38 erfolgt entlang der Schwerkraftrichtung g von oberhalb der Werkstückhalteeinrichtung 20.

Zeitgleich oder danach wird ein zweiter Stator 32 in die zweite Statoraufnahme 30 der Werkstückhalteeinrichtung 20 eingebracht, so dass Hairpins des zweiten Stators 32 mit ihren freien Enden insbesondere paarweise durch Öffnungen einer an der zweiten Statoraufnahme 30 vorgesehenen Maskierscheibe 34 herausragen. Das Einbringen des zweiten Stators 32 kann mittels der Handhabungseinrichtung 26 erfolgen, wie oben zum ersten Stator 32 beschrieben.

Der zweite Stator 32 wird nach einem Einbringen in die zweite Statoraufnahme 30 in dieser gehalten und gespannt. Das Halten und Spannen des zweiten Stators 32 kann analog erfolgen wie beim ersten Stator 32 beschrieben.

Danach werden die aus der Maskierscheibe 34 herausragenden freien Enden 40 der Hairpins 38 des zweiten Stators 32 mittels der Ablängeeinrichtung 22 auf eine definierte Länge abgelängt (definierter Überstand der Hairpins bezogen auf die Maskierscheibe 34). Dies erfolgt auf die gleiche Weise wie beim ersten Stator 32 beschrieben.

Das Verschweißen der Enden 40 der Hairpins 38 des ersten Stators 32 und das Ablängen der Enden der Hairpins des zweiten Stators 32 erfolgt teilweise oder vollständig gleichzeitig (teilweise oder vollständige zeitliche Überlappung von Verschweißen und Ablängen). Mit anderen Worten werden die zwei Statoren 32 in zeitlicher Überlappung gemeinsam in der Vorrichtung 10 bearbeitet.

Nach einem Verschweißen der Hairpin-Enden 40 des ersten Stators 32 und einem Ablängen der Hairpin-Enden 40 des zweiten Stators 32 wird die Werkstückhalteeinrichtung 20 zurück verschwenkt (im Beispiel im 180°), wobei der erste Stator 32 von der Schweißeinrichtung 24 zur Ablängeeinrichtung 22 verlagert wird. Der zweite Stator 32 wird durch das Verschwenken der Werkstückhalteeinrichtung 20 von der Ablängeeinrichtung 22 zur Schweißeinrichtung 24 verlagert. Dort werden die aus der Maskierscheibe 34' der zweiten Statoraufnahme 30 herausragenden (abgelängten) Enden der Hairpins des zweiten Stators 32 mittels der Schweißeinrichtung 24 insbesondere paarweise verschweißt. Gleichzeitig oder zeitlich überlappend kann der erste Stator 32 aus der ersten Statoraufnahme 28 entnommen werden.

Zur Entnahme des ersten Stators 32 wird die Verspannung der Enden 40 der Hairpins 38 des ersten Stators 32 an der Maskierscheibe 34 gelöst und danach wird die axiale Verspannung des ersten Stators 32 in der ersten Statoraufnahme 28 gelöst. Danach wird der erste Stator 32 aus der ersten Statoraufnahme 28 entnommen. Diese Entnahme kann ggf. mittels der Handhabungseinrichtung 26 erfolgen, die den Stator 32 an der ersten Statoraufnahme 28 aufnimmt, diesen bspw. zu einer Übergabestation verlagert und auf oder an der Übergabestation positioniert.

Nach einer Entnahme des ersten Stators 32 aus der ersten Statoraufnahme 28 kann die Maskierscheibe 34 der ersten Statoraufnahme 28 optional gereinigt werden (ggf. nicht nach jedem Arbeitsgang erforderlich). Zur Reinigung kann die Reinigungseinrichtung aktiviert werden, wobei der Schwenkarm 49 verschwenkt wird und die Bürsteneinheit 48 zur Maskierscheibe 34 führt, wo die Bürsteneinheit 48 die Maskierscheibe 34 reinigt.

Nach einer Entnahme des ersten Stators 32 aus der ersten Statoraufnahme 28 kann, ggf. nach einer Reinigung der Maskierscheibe 34, ein weiterer Stator 32 in die erste Statoraufnahme 28 der Werkstückhalteeinrichtung 20 eingebracht werden. Der weitere Stator 32 wird danach bearbeitet wie zum ersten Stator 32 beschrieben.

## Patentansprüche

1. Vorrichtung (10) zum Ablängen und Verschweißen von Hairpin-Enden (40) an Statoren (32), mit
- einer Werkstückhalteeinrichtung (20) für die Statoren (32), wobei die Werkstückhalteeinrichtung (20) zwei Statoraufnahmen (28, 30) zum Halten und Spannen von jeweils einem Stator (32) aufweist, wobei an jeder Statoraufnahme (28, 30) eine Maskierscheibe (34) mit Öffnungen (36) vorgesehen ist, durch die bei in der Statoraufnahme (28, 30) angeordnetem Stator (32) jeweils Hairpins (38) des Stators (32) mit ihren freien Enden (40) insbesondere paarweise herausragen,
- einer Ablängeeinrichtung (22) zum Ablängen von aus der Maskierscheibe (34) herausragenden freien Enden (40) der Hairpins (38) auf eine definierte Länge, und
- einer Schweißeinrichtung (24) zum insbesondere paarweisen Verschweißen der aus der Maskierscheibe (34) herausragenden freien Enden (40) der Hairpins (38),
charakterisiert dadurch, dass
die Werkstückhalteeinrichtung (20) schwenkbar um eine Schwenkachse (42) gelagert ist, so dass ein in einer der Statoraufnahmen (28, 30) angeordneter Stator (32) durch einen Schwenkvorgang der Werkstückhalteeinrichtung (20) von der Ablängeeinrichtung (22) zur Schweißeinrichtung (24) und/oder von der Schweißeinrichtung (24) zur Ablängeeinrichtung (22) verlagert werden kann, wobei die Werkstückhalteeinrichtung (20), die Ablängeeinrichtung (22) und die Schweißeinrichtung (24) derart zueinander angeordnet sind, dass wenn sich eine der Statoraufnahmen (28, 30) an der Ablängeeinrichtung (22) befindet, die andere Statoraufnahme (30, 28) an der Schweißeinrichtung (24) befindet und/oder
wobei die Schwenkachse (42) der Werkstückhalteeinrichtung (20) zwischen den beiden Statoraufnahmen (28, 30) angeordnet ist, wobei, wenn sich eine der Statoraufnahmen (28, 30) an der Ablängeeinrichtung (22) befindet, die Ablängeeinrichtung (22) auf einer Seite und die Schweißeinrichtung (24) auf der gegenüberliegenden Seite der Werkzeughalteeinrichtung (20) angeordnet ist.

2. Vorrichtung (10) nach Anspruch 1, **dadurch gekennzeichnet, dass** die Statoraufnahmen (28, 30) jeweils um eine bezogen auf die Werkstückhalteeinrichtung (20) normale Achse (96) drehbar an der Werkstückhalteeinrichtung (20) gelagert sind, wobei jeweils ein Drehantrieb (98) vorgesehen ist, durch den die Statoraufnahme (28, 30) gedreht werden kann.

3. Vorrichtung (10) nach einem der voranstehenden Ansprüche, **dadurch gekennzeichnet, dass** die Ablängeeinrichtung (22) auf einer entlang einer Verfahrrichtung (g) verfahrbaren Konsole (106) angeordnet ist, wobei die Ablängeeinrichtung (22) durch Verfahren der Konsole (106) entlang der Verfahrrichtung (g) zur Maskierscheibe (34) der sich an der Ablängeeinrichtung (22) befindenden Statoraufnahme (28, 30) herangeführt und/oder von der

4. Vorrichtung (10) nach einem der voranstehenden Ansprüche, **dadurch gekennzeichnet, dass** an der Ablängeeinrichtung (22) ein Kamerasystem zur Erfassung von abgelängten Hairpin-Enden (40) vorgesehen ist.

5. Vorrichtung (10) nach einem der voranstehenden Ansprüche, **dadurch gekennzeichnet, dass** die Ablängeeinrichtung (22) und/oder die Schweißeinrichtung (24) relativ zur Werkstückhalteeinrichtung (20) schwingungsentkoppelt sind.

6. Vorrichtung (10) nach einem der voranstehenden Ansprüche, **dadurch gekennzeichnet, dass** die Schweißeinrichtung (24) eine verlagerbare Schutzhaube aufweist, mittels der der Arbeitsbereich der Schweißeinrichtung (24) nach außen hin zumindest weitgehend abgeschlossen werden kann.

7. Vorrichtung (10) nach einem der voranstehenden Ansprüche, **dadurch gekennzeichnet, dass** an der Schweißeinrichtung (24) ein Kamerasystem zur Erfassung von verschweißten Hairpin-Enden (40) vorgesehen ist.

8. Vorrichtung (10) nach einem der voranstehenden Ansprüche, **dadurch gekennzeichnet, dass** eine Absaugeinrichtung vorgesehen ist, die den Arbeitsbereich der Schweißeinrichtung (24) absaugt.

9. Verfahren zum Ablängen und Verschweißen von Hairpins (38) von Statoren (32) mittels einer Vorrichtung (10) nach einem der voranstehenden Ansprüche mit den folgenden Schritten:
- Einbringen eines ersten Stators (32) in eine erste Statoraufnahme (28) einer Werkstückhalteeinrichtung (20), so dass Hairpins (38) des ersten Stators (32) mit ihren freien Enden (40) insbesondere paarweise aus Öffnungen (36) einer Maskierscheibe (34) der ersten Statoraufnahme (28) herausragen,
- Ablängen der aus der Maskierscheibe (34) herausragenden freien Enden (40) der Hairpins (38) des ersten Stators (32) auf eine definierte Länge mittels einer Ablängeeinrichtung (22),
- Verschwenken der Werkstückhalteeinrichtung (20), wobei der erste Stator (32) von der Ablängeeinrichtung (22) zu einer Schweißeinrichtung (24) verlagert wird,
- Verschweißen der aus der Maskierscheibe (34) der ersten Statoraufnahme (28) herausragenden Enden (40) der Hairpins (38) des ersten Stators (32) mittels der Schweißeinrichtung (24),
- Einbringen eines zweiten Stators (32) in eine zweite Statoraufnahme (30) der Werkstückhalteeinrichtung (20),
so dass Hairpins (38) des zweiten Stators (32) mit ihren freien Enden (40) insbesondere paarweise durch Öffnungen (36) einer an der zweiten Statoraufnahme (30) vorgesehenen Maskierscheibe (34) herausragen, und
- Ablängen von aus der Maskierscheibe (34) herausragenden freien Enden (40) der Hairpins (38) des zweiten Stators (32) auf eine definierte Länge mittels der Ablängeeinrichtung (22).

10. Verfahren nach Anspruch 9, **dadurch gekennzeichnet, dass** das Verschweißen der Enden (40) der Hairpins (38) des ersten Stators (32) und das Ablängen der Enden (40) der Hairpins (38) des zweiten Stators (32) teilweise oder vollständig gleichzeitig erfolgt.

11. Verfahren nach Anspruch 9 oder 10, **dadurch gekennzeichnet, dass** der erste Stator (32) nach einem Einbringen in die erste Statoraufnahme (28) in dieser gehalten und gespannt wird und/oder dass der zweite Stator (32) nach einem Einbringen in die zweite Statoraufnahme (30) in dieser gehalten und gespannt wird.

12. Verfahren nach einem der Ansprüche 9 bis 11, **dadurch gekennzeichnet, dass** nach einem Einbringen des Stators (32) in der Statoraufnahme (28, 30) der Stator (32) axial verspannt wird und danach die Enden (40) der Hairpins (38) an der Maskierscheibe (34) verspannt werden.

13. Verfahren nach einem der Ansprüche 9 bis 12, **dadurch gekennzeichnet, dass** nach einem Verschweißen der Enden (40) des ersten Stators (32) und einem Ablängen der Enden (40) des zweiten Stators (32) die Werkstückhalteeinrichtung (20) verschwenkt wird, wobei der erste Stator (32) von der Schweißeinrichtung (24) zur Ablängeeinrichtung (22) verlagert wird, wo der erste Stator (32) aus der ersten Statoraufnahme (28) entnommen wird.

14. Verfahren nach einem der Ansprüche 9 bis 13, **dadurch gekennzeichnet, dass** vor einer Entnahme des ersten Stators (32) aus der ersten Statoraufnahme (28) die Verspannung der Enden (40) der Hairpins (38) an der Maskierscheibe (34) gelöst wird und danach die axiale Verspannung des Stators (32) in der ersten Statoraufnahme (28) gelöst wird.

## Claims

1. Device (10) for cutting to length and welding hairpin ends (40) on stators (32), comprising
- a workpiece holding apparatus (20) for the stators (32), wherein the workpiece holding apparatus (20) has two stator receptacles (28, 30) for holding and clamping one stator (32) each, wherein a masking disk (34) is provided on each stator receptacle (28, 30) and has openings (36) through which when the stator (32) is arranged in the stator receptacle (28, 30), hairpins (38) of the stator (32) protrude with their free ends (40), in particular in pairs,
- a cutting apparatus (22) for cutting to a defined length free ends (40), protruding from the masking disk (34), of the hairpins (38), and
- a welding apparatus (24) for welding, in particular in pairs, the free ends (40), protruding from the masking disk (34), of the hairpins (38),
**characterized in that**
the workpiece holding apparatus (20) is pivotably mounted about a pivot axis (42) such that a stator (32) arranged in one of the stator receptacles (28, 30) can be relocated from the cutting apparatus (22) to the welding apparatus (24) and/or from the welding apparatus (24) to the cutting apparatus (22) by a pivot process of the workpiece holding apparatus (20), wherein the workpiece holding apparatus (20), the cutting apparatus (22), and the welding apparatus (24) are arranged relative to each other in such a way that when one of the stator receptacles (28, 30) is located at the cutting apparatus (22), the other stator receptacle (30, 28) is located at the welding apparatus (24) and/or
wherein the pivot axis (42) of the workpiece holding apparatus (20) is arranged between the two stator receptacles (28, 30), wherein if one of the stator receptacles (28, 30) is located at the cutting apparatus (22), the cutting apparatus (22) is arranged on one side and the welding apparatus (24) is arranged on the opposite side of the tool holding apparatus (20).

2. Device (10) according to claim 1, **characterized in that** the stator receptacles (28, 30) are each mounted on the workpiece holding apparatus (20) so as to be rotatable about an axis (96) normal to the workpiece holding apparatus (20), wherein in each case a rotary drive (98) is provided by which the stator receptacle (28, 30) can be rotated.

3. Device (10) according to either of the preceding claims, **characterized in that** the cutting apparatus (22) is arranged on a console (106) movable in a movement direction (g), wherein the cutting apparatus (22) is brought toward the masking disk (34) of the stator receptacle (28, 30) located at the cutting apparatus (22) by moving the console (106) in the travel direction (g).

4. Device (10) according to any of the preceding claims, **characterized in that** a camera system for detecting cut-to-length hairpin ends (40) is provided at the cutting apparatus (22).

5. Device (10) according to any of the preceding claims, **characterized in that** the cutting apparatus (22) and/or the welding apparatus (24) are vibrationally decoupled from the workpiece holding apparatus (20).

6. Device (10) according to any of the preceding claims, **characterized in that** the welding apparatus (24) has a relocatable protective hood by means of which the working region of the welding apparatus (24) can be largely closed off to the outside.

7. Device (10) according to any of the preceding claims, **characterized in that** a camera system for detecting welded hairpin ends (40) is provided at the welding apparatus (24).

8. Device (10) according to any of the preceding claims, **characterized in that** a suction-cleaning apparatus is provided which suction-cleans the working region of the welding apparatus (24).

9. Method for cutting to length and welding hairpins (38) of stators (32) by means of a device (10) according to any of the preceding claims, comprising the following steps:
- introducing a first stator (32) into a first stator receptacle (28) of a workpiece holding apparatus (20) such that hairpins (38) of the first stator (32) protrude with their free ends (40), in particular in pairs, from openings (36) in a masking disk (34) of the first stator receptacle (28),
- cutting to a defined length the free ends (40), protruding from the masking disk (34), of the hairpins (38) of the first stator (32) by means of a cutting apparatus (22),
- pivoting the workpiece holding apparatus (20), wherein the first stator (32) is relocated from the cutting apparatus (22) to a welding apparatus (24),
- welding the ends (40), protruding from the masking disk (34) of the first stator receptacle (28), of the hairpins (38) of the first stator (32) by means of the welding apparatus (24),
- introducing a second stator (32) into a second stator receptacle (30) of the workpiece holding apparatus (20) such that hairpins (38) of the second stator (32) protrude with their free ends (40), in particular in pairs, through openings (36) in a masking disk (34) provided on the second stator receptacle (30), and
- cutting to a defined length free ends (40), protruding from the masking disk (34), of the hairpins (38) of the second stator (32) by means of the cutting apparatus (22).

10. Method according to claim 9, **characterized in that** the steps of welding the ends (40) of the hairpins (38) of the first stator (32) and of cutting to length the ends (40) of the hairpins (38) of the second stator (32) are carried out partially or completely simultaneously.

11. Method according to claim 9 or 10, **characterized in that** the first stator (32) is held and clamped in the first stator receptacle (28) after being introduced thereinto and/or **in that** the second stator (32) is held and clamped in the second stator receptacle (30) after being introduced thereinto.

12. Method according to any of claims 9 to 11, **characterized in that** after introducing the stator (32) into the stator receptacle (28, 30), the stator (32) is axially clamped and then the ends (40) of the hairpins (38) are clamped to the masking disk (34).

13. Method according to any of claims 9 to 12, **characterized in that** after welding the ends (40) of the first stator (32) and cutting to length the ends (40) of the second stator (32), the workpiece holding apparatus (20) is pivoted, wherein the first stator (32) is relocated from the welding apparatus (24) to the cutting apparatus (22), where the first stator (32) is removed from the first stator receptacle (28).

14. Method according to any of claims 9 to 13, **characterized in that** before removing the first stator (32) from the first stator receptacle (28), the ends (40) of the hairpins (38) are released from being clamped on the masking disk (34) and then the stator (32) is released from being axially clamped in the first stator receptacle (28).

## Revendications

1. Dispositif (10) pour le découpage et le soudage des extrémités des hairpins (40) des stators (32), comprenant - un dispositif de maintien (20) pour les stators (32), le dispositif de maintien (20) comportant deux supports de stator (28, 30) destinés chacun à maintenir et serrer un stator (32), chaque support de stator (28, 30) étant pourvu d'un disque de masquage (34) avec des ouvertures (36) à travers lesquelles, lorsque le stator (32) est disposé dans le support de stator (28, 30), les hairpins (38) du stator (32) dépassent avec leurs extrémités libres (40), notamment par paires, - un dispositif de découpage (22) pour découper les extrémités libres (40) des hairpins (38) dépassant du disque de masquage (34) à une longueur définie, et un dispositif de soudage (24) pour souder, notamment par paires, les extrémités libres (40) des hairpins (38) dépassant du disque de masquage (34), **caractérisé en ce que**
le dispositif de maintien (20) est monté de manière pivotante autour d'un axe de pivotement (42), de sorte qu'un stator (32) disposé dans l'un des supports de stator (28, 30) peut, par un mouvement de basculement du dispositif de maintien (20), être déplacé du dispositif de découpage (22) vers le dispositif de soudage (24) et/ou du dispositif de soudage (24) vers le dispositif de découpage (22), le dispositif de maintien (20), le dispositif de découpage (22) et le dispositif de soudage (24) étant disposés l'un par rapport à l'autre de sorte que, lorsqu'un des supports de stator (28, 30) se trouve au niveau du dispositif de découpage (22), l'autre support de stator (30, 28) se trouve au niveau du dispositif de soudage (24) et/ou que l'axe de pivotement (42) du dispositif de maintien (20) est disposé entre les deux supports de stator (28, 30), auquel cas, si l'un des supports de stator (28, 30) se trouve au niveau du dispositif de découpage (22), le dispositif de découpage (22) est disposé d'un côté et le dispositif de soudage (24) sur le côté opposé du dispositif de maintien (20).

2. Dispositif (10) selon la revendication 1, **caractérisé en ce que** les supports de stator (28, 30) sont respectivement montés de manière tournante sur le dispositif de maintien (20) autour d'un axe (96) normal par rapport au dispositif de maintien (20), chaque support étant pourvu d'un entraînement rotatif (98) permettant de faire tourner le support de stator (28, 30).

3. Dispositif (10) selon l'une quelconque des revendications précédentes, **caractérisé en ce que** le dispositif de découpage (22) est disposé sur une console (106) déplaçable le long d'une direction de déplacement (g), le dispositif de découpage (22) pouvant être amené, par le déplacement de la console (106) le long de la direction de déplacement (g), vers le disque de masquage (34) du support de stator (28, 30) se trouvant au niveau du dispositif de découpage (22).

4. Dispositif (10) selon l'une quelconque des revendications précédentes, **caractérisé en ce qu'**un système de caméra est prévu sur le dispositif de découpage (22) pour la détection des extrémités des hairpins (40) tronçonnées.

5. Dispositif (10) selon l'une quelconque des revendications précédentes, **caractérisé en ce que** le dispositif de découpage (22) et/ou le dispositif de soudage (24) sont désaccouplés des vibrations par rapport au dispositif de maintien (20).

6. Dispositif (10) selon l'une quelconque des revendications précédentes, **caractérisé en ce que** le dispositif de soudage (24) comporte un capot de protection déplaçable, grâce auquel la zone de travail du dispositif de soudage (24) peut être fermée vers l'extérieur au moins en grande partie.

7. Dispositif (10) selon l'une quelconque des revendications précédentes, **caractérisé en ce qu'**un système de caméra est prévu au niveau du dispositif de soudage (24) pour la détection des extrémités des hairpins (40) soudées.

8. Dispositif (10) selon l'une quelconque des revendications précédentes, **caractérisé en ce qu'**un dispositif d'aspiration est prévu, lequel aspire la zone de travail du dispositif de soudage (24).

9. Procédé de découpage et de soudage des hairpins (38) des stators (32) au moyen d'un dispositif (10) selon l'une des revendications précédentes, comprenant les étapes suivantes :
- Introduction d'un premier stator (32) dans un premier support de stator (28) d'un dispositif de maintien (20), de sorte que les hairpins (38) du premier stator (32), avec leurs extrémités libres (40), dépassent, en particulier par paires, des ouvertures (36) d'un disque de masquage (34) du premier support de stator (28),
- Coupe à une longueur définie des extrémités libres (40) des hairpins (38) du premier stator (32) qui dépassent du disque de masquage (34), au moyen d'un dispositif de découpage (22),
- Basculement du dispositif de maintien (20), le premier stator (32) étant transféré du dispositif de découpage (22) vers le dispositif de soudage (24),
- Soudage des extrémités (40) des hairpins (38) du premier stator (32) qui dépassent du disque de masquage (34) du premier support de stator (28), au moyen du dispositif de soudage (24),
- Introduction d'un second stator (32) dans un second support de stator (30) du dispositif de maintien (20), de sorte que les hairpins (38) du second stator (32), avec leurs extrémités libres (40), ressortent, en particulier par paires, à travers des ouvertures (36) d'un disque de masquage (34) prévu sur le second support de stator (30), et
- Coupe à une longueur définie des extrémités libres (40) des hairpins (38) du second stator (32) qui dépassent du disque de masquage (34), au moyen du dispositif de découpage (22).

10. Procédé selon la revendication 9, **caractérisé en ce que** le soudage des extrémités (40) des hairpins (38) du premier stator (32) et le découpage des extrémités (40) des hairpins (38) du second stator (32) sont effectués partiellement ou entièrement simultanément.

11. Procédé selon la revendication 9 ou 10, **caractérisé en ce que** le premier stator (32), après son introduction dans le premier support de stator (28), y est maintenu et mis en tension et/ou que le second stator (32), après son introduction dans le second support de stator (30), y est maintenu et mis en tension.

12. Procédé selon l'une quelconque des revendications 9 à 11, **caractérisé en ce que**, après l'introduction du stator (32) dans le support de stator (28, 30), le stator (32) est mis en tension axialement et que, par la suite, les extrémités (40) des hairpins (38) sont tendues au niveau du disque de masquage (34).

13. Procédé selon l'une des revendications 9 à 12, **caractérisé en ce que**, après le soudage des extrémités (40) du premier stator (32) et le découpage des extrémités (40) du second stator (32), le dispositif de maintien (20) est basculé, le premier stator (32) étant transféré du dispositif de soudage (24) vers le dispositif de découpage (22), où le premier stator (32) est retiré du premier support de stator (28).

14. Procédé selon l'une des revendications 9 à 13, **caractérisé en ce que**, avant le retrait du premier stator (32) du premier support de stator (28), la tension des extrémités (40) des hairpins (38) sur le disque de masquage (34) est relâchée et ensuite la tension axiale du stator (32) dans le premier support de stator (28) est relâchée.
